# EUROPEAN PATENT SPECIFICATION

(11) **EP 3 356 667 B1**
(45) Date of publication and mention of the grant of the patent: **02.06.2021**
(21) Application number: 16852704.2
(22) Date of filing: 30.09.2016
(51) Int. Cl.: F02M 61/18, B05B 1/14, B05B 1/16, F02M 61/00, F02M 61/16

(54) **SPRAY TARGETING AND PLUME SHAPING FOR COLLIDING JET ATOMIZER WITH ASYMMETRICAL RADIAL DISTRIBUTION**
SPRÜHZIELUNG UND FAHNENFORMUNG FÜR KOLLIDIERENDEN STRAHLZERSTÄUBER MIT ASYMMETRISCHER RADIALVERTEILUNG
CIBLAGE PAR PULVÉRISATION ET MISE EN FORME DE PANACHE POUR PULVÉRISATEUR À JET EN COLLISION AVEC DISTRIBUTION ASYMÉTRIQUE RADIALE

(30) Priority: 30.09.2015 US 201562235221 P
(43) Date of publication of application: 08.08.2018
(73) Proprietor: Nostrum Energy Pte. Ltd., Singapore 609969 (SG)
(72) Inventor: MULYE, Nirmal, Kendall Park, New Jersey 08824 (US); BARROS NETO, Osanan L., Commerce TWP, Michigan 43890 (US); LOSCRUDATO, Frank S., Ann Arbor, Michigan 48105 (US); ATKINSON, William R., Houghton, Michigan 49931 (US)
(74) Representative: Dannenberger, Oliver Andre
(86) International application number: PCT/US2016/054754
(87) International publication number: WO 2017/059237

(56) References cited:
- EP-A1- 3 303 819
- WO-A1-2015/057801
- JP-A- 2003 328 904
- US-A- 2 323 464
- US-A- 5 529 035
- US-A- 5 540 200
- US-A- 6 089 476
- US-A1- 2001 017 325
- US-B2- 7 163 159
- US-B2- 8 468 834

## Description

### FIELD OF THE DISCLOSURE

The present disclosure relates to a structure for creating a directed fluid spray plume from colliding jets. More particularly, the present disclosure relates to a mechanism used for internal combustion engines for implementing satisfactory collision of a plurality of fluid jets.

### BACKGROUND

Directing a spray of fuel into an internal combustion engine is an important aspect of the design and operation of spark-ignition or compression ignition engines. In operation, the plume of fuel can be directed into a combustion chamber, the intake tract of an engine or the individual cylinder intake runners, to minimize surface impingement, improve vaporization and mixture formation to maximize the volume of the liquid participating in the intended purpose (such as combustion) of a volatile and/or a non-volatile liquid (such as, fuels and/or water). The directing of fuel sprays is of particular importance in internal combustion (spark or compression ignition) engines with direct fuel injection or with port fuel injection.

Achieving effective spray targeting, whether in a direct injection, port fuel injection or multi-cylinder port injection, is an important aspect of the design and operation of an internal combustion engine and provides significant advantages thereto.

Both liquid fuels and water are typically injected into engines. Fuels can be diesel-type fuels, gasoline (petrol), alcohols, and mixtures thereof. Alcohols include ethanol and methanol, which are commonly blended with gasoline. Water is also often injected into engines to provide an internal cooling effect and knock or NOx reduction; and because of the large coefficient of expansion provided by water, it is converted to steam during combustion.

Modern engines typically use fuel injection to introduce fuel into engines. Such fuel injection may be by port injection or direct injection. In port injection engines, fuel injectors are located at some point in the intake train before the cylinder, and the fuel is introduced into the air stream, which is generally close to atmospheric pressures for normally aspirated operation and up to 2-3 atm for forced induction applications. Atomization of fuels and other liquids injected into engines is important, as only fuel vapor can participate in combustion. Optimally, any injected liquid is atomized prior to contact of a stream of injected liquid with any interior surface of the engine. If liquid contacts surfaces, it can wash away lubricants, and pool, which results in sub-optimal combustion. Pooled fuel, during combustion, causes carbon deposits, increased emissions, and reduced engine power.

The spray configuration in conventional fuel injectors or atomizers typically consists of one or more jets or streams aimed outwards from the injector. However, this configuration results in impaction of liquids on the intake manifold and intake port walls, which causes a film to be formed. The film needs to be accounted for in transient fuelling calculations.

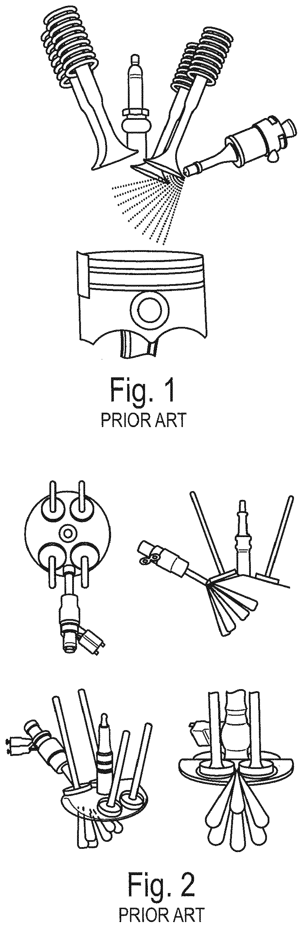

In an internal combustion engine with a stratified direct injection fuel system, fuel is injected directly into the combustion chamber in the form of a spray plume that is most often targeted down the combustion chamber toward the piston, which is also referenced as a wall guided injection system. The most common injector location is at an acute angle, between 60 and 90 degrees to the central longitudinal axis of the combustion chamber cylinder and at the top of the combustion chamber, usually at the top dome edge or ceiling edge of the combustion chamber, on the intake side of the combustion chamber, as illustrated in Fig. 1. Many combustion systems utilize conventional multi-hole injectors with a directed spray plume(s), which plume(s) are emitted from orifices in the injector nozzle at an angle nonplanar to the central longitudinal axis of the injector and aligned to the central longitudinal axis of the spray plume(s), where each orifice results in a particular jet or plume. The orifices are globally oriented to provide a spray pattern directed outward and downward toward the piston, as illustrated in Fig. 2.

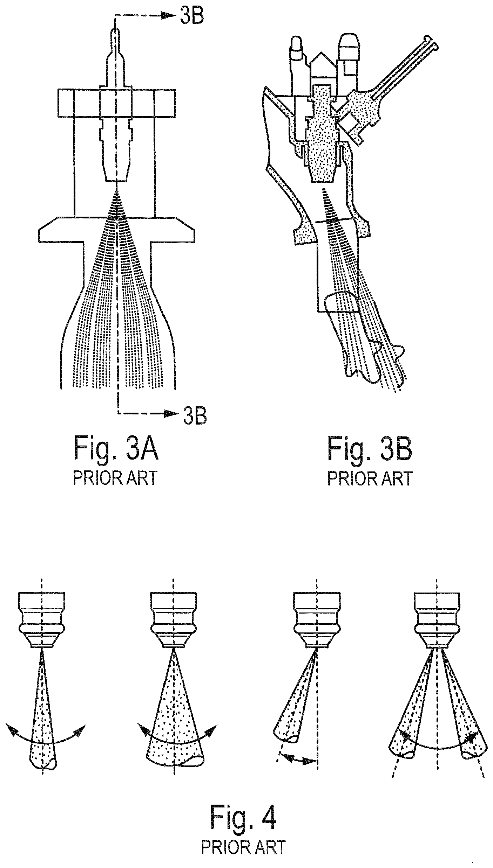

In an internal combustion engine with homogenous port injection fuel system, where fuel is injected into the intake air stream prior to entering the combustion chamber, either through a single injector located before an air metering device or through multiple injectors immediately before entering the combustion chamber and downstream of an air metering device, it is not uncommon to direct the spray plume to minimize surface impingement on interior walls of the intake tract, the intake valves or the walls of the intake track in the cylinder head, as illustrated in Fig. 3. In addition, it is not uncommon, in the case of multi-valve cylinder heads, where two or more intake valves are present for a single combustion chamber, to shape the fuel spray plume in addition to directing the plume or plumes, including the shaping of two or more plumes, including narrow plumes, wide plumes, bent plumes and split plumes as illustrated in Fig. 4.

WO 2015/057801 A1 describes a liquid injector atomizer having an injector nozzle with a plurality of orifices. Each orifice directs a jet of pressurized liquid out of the injector body, and at least two of the liquid jets are aimed at one or more collision points.

Therefore, there is a need for improved spray targeting and plume shaping methodology, which is capable of colliding jets to generate a fine spray plume of atomized liquid.

### SUMMARY

The present disclosure provides an injector nozzle used with an internal combustion engine for guiding and shaping a fluid flow. The injector nozzle includes a nozzle body, which includes an inlet for admitting the fluid flow and an outlet. The injector nozzle further includes a fluid flow guide in fluid communication with the outlet of the nozzle body. The fluid flow guide includes a plurality of fluid passageways for creating a plurality of stream jets. Each passageway has an orifice through which a respective stream jet is discharged from a respective passageway. The plurality of fluid passageways includes: a first group of fluid passageways and a first group of orifices corresponding to the first group of fluid passageways, respectively; and a second group of fluid passageways and a second group of orifices corresponding to the second group of fluid passageways, respectively. Imaginary extensions of the first group of passageways converge to create at least one first focal point, such that the plurality of stream jets passing through the first group of passageways impinge on each other to form a first spray plume. Imaginary extensions of the second group of passageways converge to create at least one second focal point, such that the plurality of stream jets passing through the second group of passageways impinge on each other to form a second spray plume. The first group of orifices are arranged on a first imaginary circle on an exterior surface of the fluid flow guide. The first group of orifices are radially asymmetrically distributed on the first imaginary circle with respect to the central axis of the first imaginary circle. The second group of orifices are arranged on a second imaginary circle on the exterior surface of the fluid flow guide. The second group of orifices are radially asymmetrically distributed on the second imaginary circle with respect to the central axis of the second imaginary circle.

According to another exemplary aspect of the present disclosure, an injector nozzle used with an internal combustion engine for guiding and shaping a fluid flow is provided. The injector nozzle includes a nozzle body that includes an inlet for admitting the fluid flow and an outlet. The injector nozzle further includes a fluid flow guide in fluid communication with the outlet of the nozzle body. The fluid flow guide includes a plurality of fluid passageways for creating a plurality of stream jets. Each passageway has an orifice through which a respective stream jet is discharged from a respective passageway. The plurality of fluid passageways includes a first group of fluid passageways. The first group of fluid passageways includes a first subgroup of passageways and a first subgroup of orifices corresponding to the first subgroup of fluid passageways, respectively. The first subgroup of orifices are arranged on a first imaginary circle on an exterior surface of the fluid flow guide. The first subgroup of orifices are radially asymmetrically distributed on the first imaginary circle with respect to the central axis of the first imaginary circle. The first group of fluid passageways further includes a second subgroup of passageways and a second subgroup of orifices corresponding to the second subgroup of fluid passageways, respectively. The second subgroup of orifices are arranged on a second imaginary circle on the exterior surface of the fluid flow guide. The second subgroup of orifices are radially asymmetrically distributed on the second imaginary circle with respect to the central axis of the second imaginary circle. The first group of fluid passageways further includes a third subgroup of at least one passageway and a third subgroup of at least one orifice corresponding to the third subgroup of at least one passageway, respectively. The third subgroup of at least one orifice is arranged on a third imaginary circle on the exterior surface of the fluid flow guide. The third subgroup of at least one orifice is radially asymmetrically distributed on the third imaginary circle with respect to the central axis of the third imaginary circle. The first imaginary circle, the second imaginary circle and the third imaginary circle are concentric. The first group of fluid passageways further includes a first central passageway passing through the central axis of the first to third imaginary circles and a first central orifice corresponding to the first central passageway. Imaginary extensions of the first subgroup of passageways, imaginary extensions of the second subgroup of passageways, imaginary extensions of the third subgroup of at least one passageway and an imaginary extension of the first central passageway converge to create at least one first focal point, such that the plurality of stream jets passing through the first group of passageways impinge on each other to form a first spray plume.

### BRIEF DESCRIPTION OF THE DRAWINGS

Fig. 1 is a schematic view showing the location and orientation of an injector in a gasoline direct injection combustion engine;
Fig. 2 is a schematic view showing spray patterns of known gasoline direct injection combustion engines;
Fig. 3 is a schematic view showing the location of an injector in a port fuel injection combustion engine;
Fig. 4 is a schematic view showing spray patterns of known port fuel injection combustion engines;
Fig. 5 is a side view of an injector nozzle;
Fig. 6 is a cross sectional view of the injector nozzle along lines 6-6 of Fig. 5;
Fig. 7 illustrates an orifice plate;
Fig. 8 illustrates another orifice plate;
Fig. 9 illustrates yet another orifice plate;
Fig. 10 illustrates still another orifice plate;
Fig. 11 illustrates still another orifice plate;
Fig. 12 illustrates still another orifice plate;
Fig. 13 illustrates yet another orifice plate;
Fig. 14 illustrates still another orifice plate;
Fig. 15 illustrates an image of a spray plume created by an embodiment of the disclosure;
Fig. 16 illustrates an image of the splay plume of Fig. 15, from a different perspective;
Fig. 17 illustrates an orifice plate according to an embodiment of the disclosure;
Fig. 18 illustrates an orifice plate according to another embodiment of the disclosure;
Fig. 19 illustrates an orifice plate according to another embodiment of the disclosure;
Fig. 20 illustrates an orifice plate according to another embodiment of the disclosure;
Fig. 21 illustrates an image of an orifice plate with split spray asymmetrical geometry; and
Fig. 22 illustrates an image of yet another orifice plate with split spray asymmetrical geometry.

### DETAILED DESCRIPTION OF EXEMPLARY EMBODIMENTS

Detailed embodiments of the present disclosure are described herein; however, it is to be understood that the disclosed embodiments are merely illustrative of the compositions, structures and methods of the disclosure that may be embodied in various forms. In addition, each of the examples given in connection with the various embodiments is intended to be illustrative, and not restrictive. Further, the figures are not necessarily drawn to scale; some features may be exaggerated to show details of particular components. Therefore, specific structural and functional details disclosed herein are not to be interpreted as limiting, but merely as a representative basis for teaching one skilled in the art to variously employ the compositions, structures and methods disclosed herein. References in the specification to "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment.

One aspect of the present disclosure provides an injector or nozzle for injecting liquids into reciprocating or rotary internal combustion engines. Such liquids include, but are not limited to, fuels, water or aqueous solutions. When the injector is in use, two or more liquid jets are aimed at an impingement point under pressure. The collision of the jets at the impingement point efficiently atomizes the liquid.

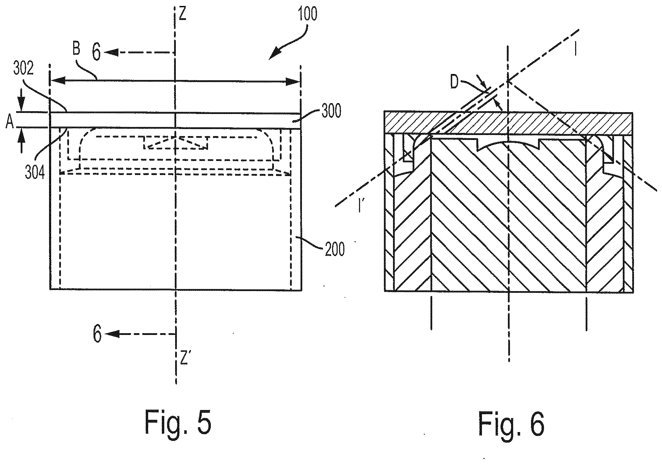

Fig. 5 is a side view of an injector nozzle 100, according to an exemplary embodiment of the present disclosure. The injector nozzle 100 is provided at a liquid outlet of an injector (the entire injector is not shown). The injector also has a liquid inlet, through which a pressurized liquid is fed into the injector. The injector nozzle 100 is designed to control the direction or characteristics of a fluid flow (for example, to increase velocity of the fluid flow), as the fluid flow exits the injector. The injector nozzle 100 includes a substantially cylindrical nozzle body 200 having an inlet and an outlet. The fluid flow is admitted into the injector nozzle through the inlet. The outlet is in fluid communication with a disk-like orifice plate 300 for guiding and discharging the fluid flow. Both the nozzle body 200 and the orifice plate 300 extend substantially symmetrically with respect to a central axis Z-Z'. The nozzle body 200 and the orifice plate 300 can be formed integrally, assembled together or retrofittably fixed together. The injector nozzle 100 can be used with a ball pintle to allow metered fluid flow. The pintle can be a solenoid controlled pintle or a piezoelectric decontrolled pintle.

Although the spray plume shaping methodology according to the disclosure will be described with respect to the injector nozzle having a nozzle body and an orifice plate associated with the nozzle body, it should be understood that the spray plume shaping methodology is equally applicable to other types of injector nozzles, which include but are not limited to injector nozzles having integrated passageways. In addition, the structure and mechanism of the injector nozzle, for guiding and discharging the fluid flow, are not limited to an orifice plate.

The orifice plate 300 has an exterior surface 302 and an opposite interior surface 304. The exterior surface 302 is downstream with respect to the interior surface 304, in view of the flowing direction of a liquid jet. The exterior surface 302 and the interior surface 304 are substantially planar and parallel to each other, thereby defining a thickness A of the orifice plate 300, which thickness may be substantially uniform. In an embodiment, the thickness A of the orifice plate 300 can range from about 0.25 mm to about 4.0 mm, while, in another embodiment, from about 0.25 mm to about 2.5 mm, and in a still further embodiment from about 0.25 mm to about 0.95 mm. For example, the thickness A can be 0.25 mm, 0.3 mm, 0.35 mm, 0.4 mm, 0.45 mm, 0.5 mm, 0.55 mm, 0.6 mm, 0.65 mm, 0.7 mm, 0.75 mm, 0.8 mm, 0.85 mm, 0.9 mm, 0.95 mm, 1.0 mm, 1.1 mm, 1.2 mm, 1.3 mm, 1.4 mm, 1.5 mm, 1.6 mm, 1.7 mm, 1.8 mm, 1.9 mm, 2.0 mm, 2.1 mm, 2.2 mm, 2.3 mm, 2.4 mm, 2.5 mm, 3.0 mm or 4.0 mm. The orifice plate 300 has a diameter B, which can range from about 4.0 mm to about 14.0 mm; in another embodiment, from about 5 mm to about 10 mm; the diameter can be 4.0mm, 4.1mm, 4.2mm, 4.3mm, 4.4mm, 4.5mm, 4.6mm, 4.7mm, 4.8mm, 4.9mm, 5.0mm, 5.1mm, 5.2mm, 5.3mm, 5.4mm, 5.45mm, 5.5mm, 5.6mm, 5.7mm, 5.8mm, 5.9mm, 6.0mm, 6.1mm, 6.2mm, 6.3mm, 6.4mm, 6.5mm, 6.6mm, 6.7mm, 6.8mm, 6.9mm, 7.0mm, 7.1mm, 7.2mm, 7.3mm, 7.4mm, 7.5mm, 7.6mm, 7.7mm, 7.8mm, 7.9mm, 8.0mm, 8.1mm, 8.2mm, 8.3mm, 8.4mm, 8.5mm, 8.6mm, 8.7mm, 8.8mm, 8.9mm, 9.0mm, 9.1mm, 9.2mm, 9.3mm, 9.4mm, 9.5mm, 9.6mm, 9.7mm, 9.8mm, 9.9mm, 10.0mm, 10.1mm, 10.2mm, 10.3mm, 10.4mm, 10.5mm, 10.6mm, 10.7mm, 10.8mm, 10.9mm, 11.0mm, 11.1mm, 11.2mm, 11.3mm, 11.4mm, 11.5mm, 11.6mm, 11.7mm, 11.8mm, 11.9mm, 12.0mm, 12.1mm, 12.2mm, 12.25mm, 12.3mm, 12.4mm, 12.5mm, 12.6mm, 12.7mm, 12.8mm, 12.9mm, 13.0mm, or 14.0mm.

Fig. 6 is a cross sectional view of the injector nozzle 100 along lines 6-6 of Fig. 5. In the sectional view, only a first fluid passageway 312 of the orifice plate 300 is shown, which extends inwardly and angularly with respect to the central axis Z-Z' from the interior surface 304 to the exterior surface 302.

In the shown embodiment, the first fluid passageway 312 forms a part of an imaginary cylinder extending along axis I-I'. The first fluid passageway 312 can be radially consistent along its axis and has a constant diameter D. For example, the diameter D can range from about 80 um to about 1000 um and; in another embodiment, from about 200 um to about 350 um. For example, the diameter D of each passageway can be 80 um, 90 um, 100 um, 110 um, 120 um, 130 um, 140 um, 150 um, 160 um, 170 um, 180 um, 190 um, 200 um, 210 um, 220 um, 230 um, 240 um, 250 um, 260 um, 270 um, 280 um, 290 um, 300 um, 310 um, 320 um, 330 um, 340 um, 350 um, 360 um, 370 um, 380 um, 390 um, 400 um, 500 um, 600 um, 700 um, 800 um, 900 um or 1000 um.

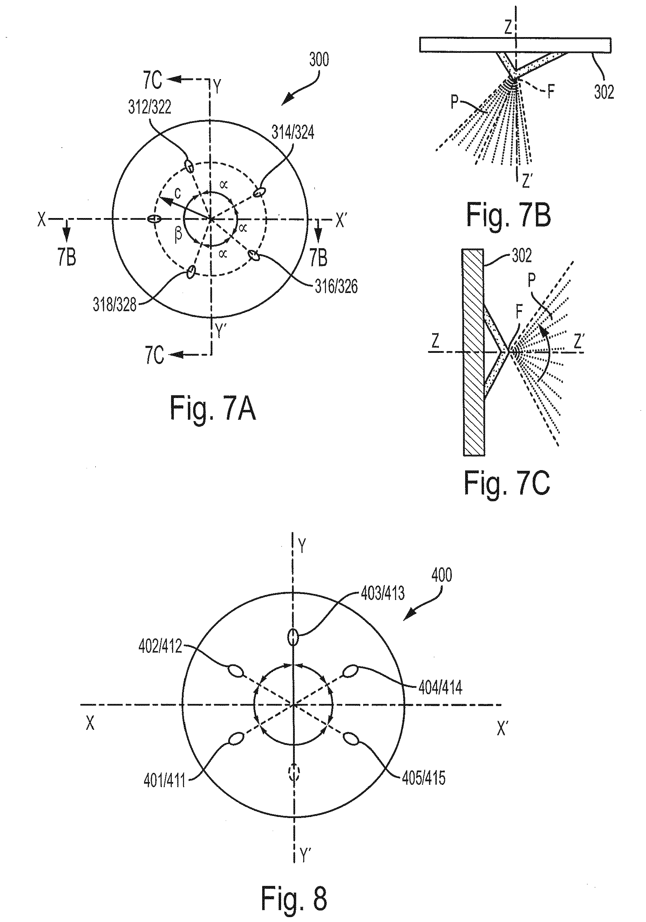

Fig. 7 (included for reference) schematically illustrates the detailed structure of the orifice plate 300. Fig. 7(a) is an end view of the orifice plate 300, when the orifice plate 300 is viewed from the interior surface 302 that is in a plane defined by the axis X-X' and the axis Y-Y'. The orifice plate 300 according to this embodiment includes the first fluid passageway 312, a second fluid passageway 314, a third fluid passageway 316 and a fourth passageway 318. All the fluid passageways can be substantially of the same diameter, although individually, each may be the same or different. The first fluid passageway 312 has a first orifice 322 on the interior surface 304. The second fluid passageway 314 has a second orifice 324 on the interior surface 304. The third fluid passageway 316 has a third orifice 326 on the interior surface 304. The fourth fluid passageway 318 has a fourth orifice 328 on the interior surface 304. The first to fourth orifices are radially distributed along an imaginary circle sharing the central longitudinal axis Z-Z' of the orifice plate 300 and having a diameter C that is smaller than the diameter B of the orifice plate 300. The first orifice 322 and the fourth orifice 328 are symmetrical with respect to the axis X-X'. The second orifice 324 and the third orifice 326 are also symmetrical with respect to the axis X-X'. The first orifice 322 and the second orifice 324 are angularly distanced from each other by an angle α that is about 72°. Similarly, the angle α is formed between the second orifice 324 and the third orifice 326 and is also formed between the third orifice 326 and the fourth orifice 328. However, the angles α formed by the above two adjacent orifices can be the same or different, even though they are all approximately 72° in this embodiment. The fourth orifice 328 and the first orifice 322 are angularly distanced from each other by the angle β that is about 144°. However, the angles can be of any suitable combination as long as the sum of the angles is 360° and the orifices are asymmetrically distributed along the imaginary circle. For example, the angle between the first orifice and the second orifice, the angle between the second orifice and the third orifice, and the angle between the third orifice and the fourth orifice can independently be in a range from about 62° to about 82°; and the angle between the fourth orifice and the first orifice can be approximately 114° to about 174°. This configuration of the orifices can be referred to as a "five minus one" orifice arrangement. In each of the above-shown embodiments, the orifices are arranged radially in a single virtual circle. However, the orifices can be arranged radially in multiple virtual circles, which are concentric and share the same central axis Z-Z' of the orifice plate.

The fluid passageways 312-318 are arranged, such that the fluid jets from each passageway substantially impinge on each other at a focal point F, as shown in Figs. 7(b) and 7(c) (included for reference). The impingement of the fluid jets guided through the fluid passageways creates a spray plume P of atomized fluid. The perpendicular distance from the focal point F to the exterior surface 302 of the orifice plate 300, along the central axis Z-Z', ranges from about 0.5 mm to about 6.0 mm.

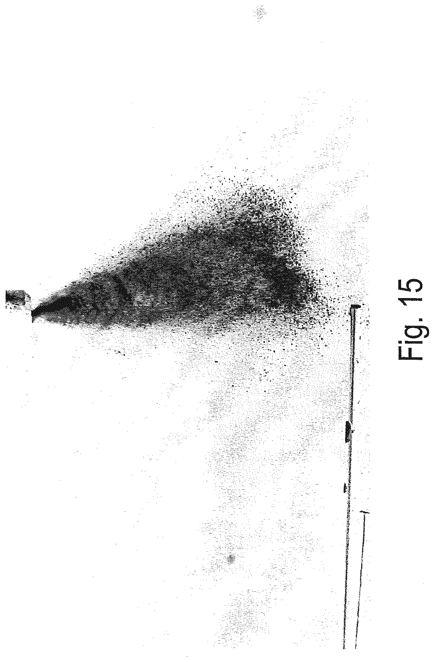

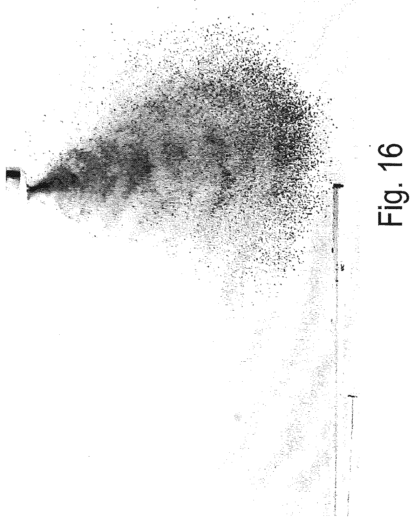

As shown in Fig. 7(b), the resultant spray plume, emitted from the impingement focal point, is oriented asymmetrically along the X-X' plane with respect to the central axis Z-Z'. Specifically, the spray plume is biased toward the quadrant or direction, which lacks a corresponding orifice. As shown in Fig. 7(c), the resultant spray plume is symmetrical along the Y-Y' plane with respect to the central axis Z-Z'. Images of the sample spray plume, as created by this embodiment, are shown in Figs. 15 and 16 from different perspectives, respectively.

Fig. 8 (included for reference) illustrates an orifice plate 400. The orifice plate 400 has same or similar structures as the orifice plate 300, except for the structures of the fluid passageways and the orifices. The orifice plate 400 includes five fluid passageways 401-405 and five orifices 411-415 associated with the five fluid passageways, respectively. All of the fluid passageways have substantially the same diameter, but the actual diameters of each of the fluid passageways may be the same or different. According to this embodiment, the first to fifth orifices are arranged on an imaginary circle having a diameter that is smaller than the diameter of the orifice plate. The fluid jets from each passageway substantially impinge on each other at a common focal point to create a spray plume of atomized fluid. The distance from the focal point to exterior orifice of the plate can be in the same range as the distance of the orifice plate 300. An included angle is formed between every two adjacent fluid jets.

An angle of about 60° is formed between the first orifice 411 and the second orifice 412, between the second orifice 412 and the third orifice 413, between the third orifice 413 and the fourth orifice 414, and between the fourth orifice 414 and the fifth orifice 415. However, in an embodiment, the various angles may be the same or different, even though they are all approximately 60°. An angle of about 120° is formed between the first orifice 411 and the fifth orifice 415. This configuration of the orifices can be referred to as a "six minus one" orifice arrangement. Although in an embodiment, these angles may be substantially the same measure in degrees; however, in some embodiments, all of the angles are the same, while in other embodiments, some or all of the of the angles are different in measure of degrees , although each of the angles are substantially the same measure of degrees. However, the angles can be of any suitable combination as long as the sum of the angles is 360° and the orifices are asymmetrically distributed along the imaginary circle. For example, an angle of about 50° to 70° is independently is formed between the first orifice 411 and the second orifice 412, between the second orifice 412 and the third orifice 413, between the third orifice 413 and the fourth orifice 414, and between the fourth orifice 414 and the fifth orifice 415. An angle of about 80° to about 160° is formed between the first orifice 411 and the fifth orifice 415. In each of the above-shown embodiments, the orifices are arranged radially in a single virtual circle. However, the orifices can be arranged radially in multiple virtual circles, which are concentric and share the same central axis Z-Z' of the orifice plate.

The resultant spray plume emitted from the impingement focal point of the orifice plate 400 is oriented asymmetrically and biased toward the quadrant or direction, which lacks a corresponding orifice. The asymmetrical colliding set results in a biased spray, which is emitted outward from the focal point and, due to the unbalanced lateral liquid momentum, biased toward the side of orifice plate between the first orifice 411 and the fifth orifice 415.

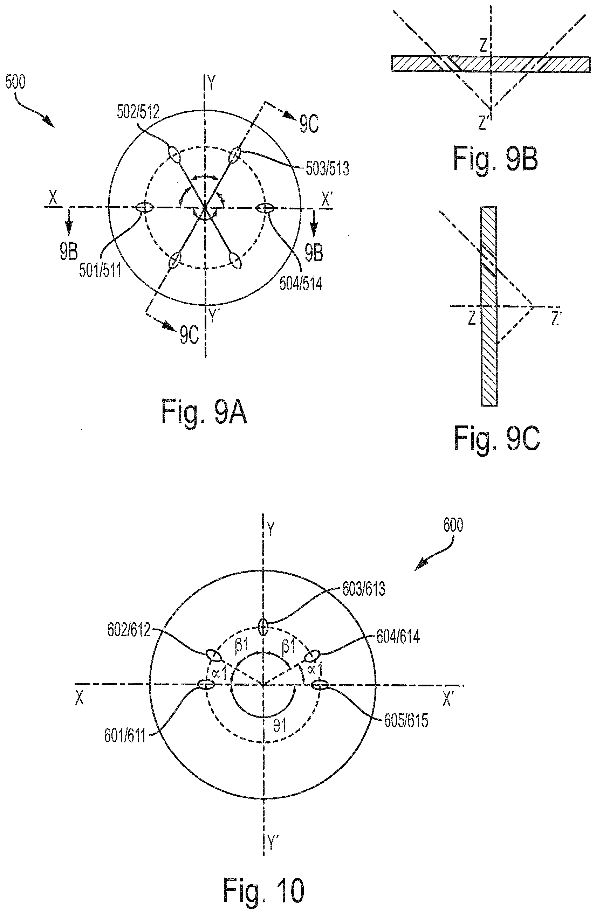

Fig. 9 (included for reference) illustrates an orifice plate 500. The orifice plate 500 has same or similar structures as the orifice plate 300, except for the structures of the fluid passageways and the orifices. The orifice plate 500 includes four fluid passageways 501-504 and four orifices 511-514 associated with the four fluid passageways, respectively. All of the fluid passageways have substantially the same diameter, but the actual diameters of each of the fluid passageways may be the same or different. According to this embodiment, the first to fourth orifices are arranged on an imaginary circle having a diameter that is smaller than the diameter of the orifice plate. The fluid jets from each passageway substantially impinge on each other at a common focal point to create a spray plume of atomized fluid. The distance from the focal point to exterior orifice of the plate can be in the same range as the distance of the orifice plate 300. An included angle is formed between every two adjacent fluid jets.

An angle of about 60° is formed between the first orifice 511 and the second orifice 512, between the second orifice 512 and the third orifice 513, and between the third orifice 513 and the fourth orifice 514. However, in an embodiment, the various angles may be the same or different, even though they are all approximately 60°. An angle of about 180° is formed between the first orifice 511 and the fourth orifice 514. However, the angles can be of any suitable combination as long as the sum of the angles is 360° and the orifices are asymmetrically distributed along the imaginary circle. For example, an angle of about 50° to about 70° is formed between the first orifice 511 and the second orifice 512, an angle of about 50° to about 70° is formed between the between the second orifice 512 and the third orifice 513, and an angle of about 50° to about 70° is formed between the between the third orifice 513 and the fourth orifice 514, wherein each of the aforementioned angles may be the same or different; and an angle of about 150° to about 210° can be formed between the fourth orifice 514 and the first orifice 511. This configuration of the orifices can be referred to as a "six minus two" orifice arrangement. In each of the above-shown embodiments, the orifices are arranged radially in a single virtual circle. However, the orifices can be arranged radially in multiple virtual circles, which are concentric and share the same central axis Z-Z' of the orifice plate. The resultant spray plume emitted from the impingement focal point of the orifice plate 500 is oriented asymmetrically and biased toward the quadrant or direction, which lacks a corresponding orifice. The asymmetrical colliding set results in a biased spray, which is emitted outward from the focal point and, due to the unbalanced lateral liquid momentum, biased toward the side of orifice plate between the first orifice 511 and the fourth orifice 514.

Fig. 10 (included for reference) illustrates an orifice plate 600. The orifice plate 600 has same or similar structures as the orifice plate 300, except for the structures of the fluid passageways and the orifices. The orifice plate 600 includes five fluid passageways 601-605 and five orifices 611-615 associated with the five fluid passageways, respectively. All of the fluid passageways have substantially the same diameter, although individually each of the fluid passageways may have the same or different diameters. According to this embodiment, the first to fifth orifices are arranged on an imaginary circle having a diameter that is smaller than the diameter of the orifice plate. The fluid jets from each passageway substantially impinge on each other at a common focal point to create a spray plume of atomized fluid. The distance from the focal point to exterior orifice of the plate can be in the same range as the distance of the orifice plate 300. An included angle is formed between every two adjacent fluid jets.

An angle α1 of about 20° is formed between the first orifice 611 and the second orifice 612 and between the fourth orifice 614 and the fifth orifice 615. However, individually, the measure of the aforesaid angles may be the same or different. An angle β1 of about 70° is formed between the second orifice 612 and the third orifice 613 and between the third orifice 613 and the fourth orifice 614. However, individually, the measure of the aforesaid angles may be the same or different. An angle θ1 of about 180° is formed between the first orifice 611 and the fifth orifice 615. However, the angles can be of any suitable combination as long as the sum of the angles is 360° and the orifices are asymmetrically distributed along the imaginary circle. For example, an angle α1 of about 10° to about 30° is formed between the first orifice 611 and the second orifice 612 and an angle of about 10° to about 30° is formed between the fourth orifice 614 and the fifth orifice 615. However, individually, the measure of the aforesaid angles may be the same or different. An angle β1 of about 60° to about 80°is formed between the second orifice 612 and the third orifice 613 and between the third orifice 613 and the fourth orifice 614. However, individually, the measure of the aforesaid angles may be the same or different. An angle θ1 of about 140° to about 220° is formed between the first orifice 611 and the fifth orifice 615. In each of the above-shown embodiments, the orifices are arranged radially in a single virtual circle. However, the orifices can be arranged radially in multiple virtual circles, which are concentric and share the same central axis Z-Z' of the orifice plate. The resultant spray plume emitted from the impingement focal point of the orifice plate 600 is oriented asymmetrically and biased toward the quadrant or direction, which lacks a corresponding orifice. The asymmetrical colliding set results in a biased spray, which is emitted outward from the focal point and, due to the unbalanced lateral liquid momentum, biased toward the side of orifice plate between the first orifice 611 and the fifth orifice 615.

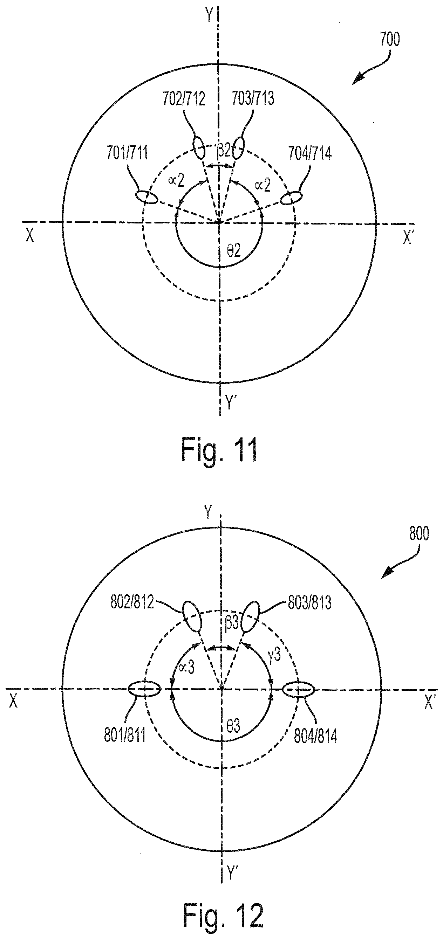

Fig. 11 (included for reference) illustrates an orifice plate 700. The orifice plate 700 has same or similar structures as the orifice plate 300, except for the structures of the fluid passageways and the orifices. The orifice plate 700 includes four fluid passageways 701-704 and four orifices 711-714 associated with the four fluid passageways, respectively. All of the fluid passageways have substantially the same diameter; however, individually the diameters of these fluid passageways may be the same or different. According to this embodiment, the first to fourth orifices are arranged on an imaginary circle having a diameter that smaller than the diameter of the orifice plate. The fluid jets from each passageway substantially impinge on each other at a common focal point to create a spray plume of atomized fluid. The distance from the focal point to exterior orifice of the plate can be in the same range as the distance of the orifice plate 300. An included angle is formed between every two adjacent fluid jets.

An angle α2 of about 75° is formed between the first orifice 711 and the second orifice 712 and between the third orifice 713 and the fourth orifice 714. However, individually, the measure of the aforesaid angles may be the same or different. An angle β2 of about 20° is formed between the second orifice 712 and the third orifice 713. An angle θ2 of about 190° is formed between the first orifice 711 and the fourth orifice 714. However, the angles can be of any suitable combination as long as the sum of the angles is 360° and the orifices are asymmetrically distributed along the imaginary circle. For example, an angle of about 65° to about 85° is formed between the first orifice 711 and the second orifice 712 and an angle of about 65° to about 85° is formed between the third orifice 713 and the fourth orifice 714. However, individually, the measure of the aforesaid angles may be the same or different. An angle β2 of about 10° to about 30°is formed between the second orifice 712 and the third orifice 713. An angle θ2 of about 160° to about 220° is formed between the first orifice 711 and the fourth orifice 714. In each of the above-shown embodiments, the orifices are arranged radially in a single virtual circle. However, the orifices can be arranged radially in multiple virtual circles, which are concentric and share the same central axis Z-Z' of the orifice plate. The resultant spray plume emitted from the impingement focal point of the orifice plate 700 is oriented asymmetrically and biased toward the quadrant or direction, which lacks a corresponding orifice. The asymmetrical colliding set results in a biased spray, which is emitted outward from the focal point and, due to the unbalanced lateral liquid momentum, biased toward the side of orifice plate between the first orifice 711 and the fourth orifice 714.

Fig. 12 (included for reference) illustrates an orifice plate 800. The orifice plate 800 has same or similar structures as the orifice plate 300, except for the structures of the fluid passageways and the orifices. The orifice plate 800 includes four fluid passageways 801-804 and four orifices 811-814 associated with the four fluid passageways, respectively. All of the fluid passageways have substantially the same diameter, although individually, each of the aforesaid fluid passageways may have the same or different diameters. According to this embodiment, the first to fourth orifices are arranged on an imaginary circle having a diameter that is smaller than the diameter of the orifice plate. The fluid jets from each passageway substantially impinge on each other at a common focal point to create a spray plume of atomized fluid. The distance from the focal point to exterior orifice of the plate can be in the same range as the distance of the orifice plate 300. An included angle is formed between every two adjacent fluid jets.

An angle α3 of about 80° is formed between the first orifice 811 and the second orifice 812. An angle β3 of about 52° is formed between the second orifice 812 and the third orifice 813. An angle γ3 of about 48° is formed between the third orifice 813 and the fourth orifice 814. An angle θ3 of about 180° is formed between the first orifice 811 and the fourth orifice 814. However, the combination of the four individual angles can be of any suitable combination as long as the sum of the angles is 360° and the orifices are asymmetrically distributed along the imaginary circle. For example, in an embodiment, the angle α3 can be in a range of about 70° to about 90°; the angle β3 can be in a range from about 42° to about 62°; the angle γ3 can be in a range from about 38° to about 58°; and the angle θ3 can be in a range from about 150° to about 210°. In each of the above-shown embodiments, the orifices are arranged radially in a single virtual circle. However, the orifices can be arranged radially in multiple virtual circles, which are concentric and share the same central axis Z-Z' of the orifice plate. The resultant spray plume emitted from the impingement focal point of the orifice plate 800 is oriented asymmetrically and biased toward the quadrant or direction, which lacks a corresponding orifice. The asymmetrical colliding set results in a biased spray, which is emitted outward from the focal point and, due to the unbalanced lateral liquid momentum, biased toward the side of orifice plate between the first orifice 811 and the fourth orifice 814.

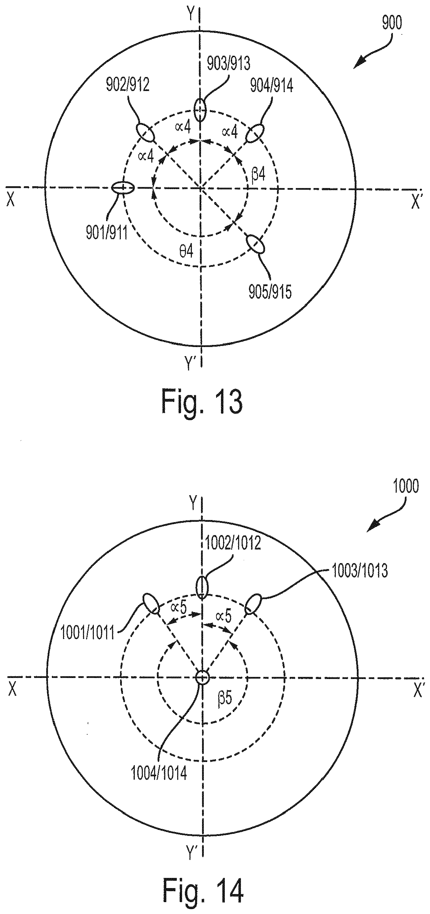

Fig. 13 (included for reference) illustrates an orifice plate 900. The orifice plate 900 has same or similar structures as the orifice plate 300, except for the structures of the fluid passageways and the orifices. The orifice plate 900 includes five fluid passageways 901-905 and five orifices 911-915 associated with the five fluid passageways, respectively. All of the fluid passageways have substantially the same diameter, although individually, each of the aforesaid fluid passageways may have the same or different diameters. According to this embodiment, the first to fifth orifices are arranged on an imaginary circle having a diameter that is smaller than the diameter of the orifice plate. The fluid jets from each passageway substantially impinge on each other at a common focal point to create a spray plume of atomized fluid. The distance from the focal point to exterior orifice of the plate can be in the same range as the distance of the orifice plate 300. An included angle is formed between every two adjacent fluid jets.

An angle α4 of about 45° is formed between the first orifice 911 and the second orifice 912, between the second orifice 912 and the third orifice 913, and between the third orifice 913 and the fourth orifice 914; however, the measure of each of the aforesaid angles may be the same or different. An angle β4 of about 90° is formed between the fourth orifice 914 and the fifth orifice 915. An angle θ4 of about 135° is formed between the first orifice 911 and the fifth orifice 915. However, the angles can be of any suitable combination as long as the sum of the angles is 360° and the orifices are asymmetrically distributed along the imaginary circle. For example, an angle of about 35° to about 55° is formed between the first orifice 911 and the second orifice 912, an angle of about 35° to about 55° is formed between the second orifice 912 and the third orifice 913, and an angle of about 35° to about 55° is formed between the third orifice 913 and the fourth orifice 914; however, the measure of each of the aforesaid angles may be the same or different. An angle β4 of about 80° to about 100° is formed between the fourth orifice 914 and the fifth orifice 915. An angle θ4 of about 95° to about 175° is formed between the first orifice 911 and the fifth orifice 915. In each of the above-shown embodiments, the orifices are arranged radially in a single virtual circle. In an embodiment, the orifices can be arranged radially in multiple virtual circles, which are concentric and share the same central axis Z-Z' of the orifice plate. The resultant spray plume emitted from the impingement focal point of the orifice plate 900 is oriented asymmetrically and biased toward the quadrant or direction, which lacks a corresponding orifice. The asymmetrical colliding set results in a biased spray, which is emitted outward from the focal point and, due to the unbalanced lateral liquid momentum, biased toward the side of orifice plate between the first orifice 911 and the fifth orifice 915. According to this embodiment, the fifth orifice 915 can effectively bias the spray plume emitted by the colliding set of the other four holes for the purpose of spray targeting. In addition, the fifth orifice 915 can also provide the ability to shape the spray plume, so as to generate plume sections that are irregular, concavely or convexly polygonal, or of any freehand shapes required for a particular application.

Fig. 14 (included for reference) illustrates an orifice plate 1000. The orifice plate 1000 has same or similar structures as the orifice plate 300, except for the structures of the fluid passageways and the orifices. The orifice plate 1000 includes four fluid passageways 1001-1004 and four orifices 1011-1014 associated with the four fluid passageways, respectively. All of the fluid passageways have substantially the same diameter, although individually, each of the diameters of the aforesaid fluid passageways may be the same or different. According to this embodiment, the first to third orifices are arranged on an imaginary circle having a diameter that smaller than the diameter of the orifice plate; the fourth orifice is arranged on the center of the imaginary circle. The fluid jets from each passageway substantially impinge on each other at a common focal point to create a spray plume of atomized fluid. The distance from the focal point to exterior orifice of the plate can be in the same range as the distance of the orifice plate 300. An included angle is formed between every two adjacent fluid jets.

An angle α5 of about 30° is formed between the first orifice 1011 and the second orifice 1012 and between the second orifice 1012 and the third orifice 1013. However, individually, the measure of each of the aforesaid angles may be the same or different. An angle β5 of about 300° is formed between the first orifice 1011 and the third orifice 1013. However, the angles can be of any suitable combination as long as the sum of the angles is 360° and the orifices are asymmetrically distributed along the imaginary circle. For example, an angle α5 of about 20° to about 40° is formed between the first orifice 1011 and the second orifice 1012 and of about 20° to about 40° is formed between the second orifice 1012 and the third orifice 1013. However, individually, the measure of each of the aforesaid angles may be the same or different. An angle β5 of about 280° to about 320° is formed between the first orifice 1011 and the third orifice 1013. In each of the above-shown embodiments, the first to third orifices are arranged radially in a single virtual circle. However, the orifices can be arranged radially in multiple virtual circles, which are concentric and share the same central axis Z-Z' of the orifice plate. The resultant spray plume emitted from the impingement focal point of the orifice plate 100 is oriented asymmetrically and biased toward the quadrant or direction, which lacks corresponding orifices. The asymmetrical colliding set results in a biased spray, which is emitted outward from the focal point and, due to the unbalanced lateral liquid momentum, biased toward the side of orifice plate with no orifices. According to this embodiment, the fourth and central orifice 1014 can effectively bias the spray plume emitted by the colliding set of the other three holes for the purpose of spray targeting. In addition, the fourth and central orifice 1014 can also provide the ability to shape the spray plume, so as to generate plume sections that are irregular, concavely or convexly polygonal, or of any freehand shapes required for a particular application.

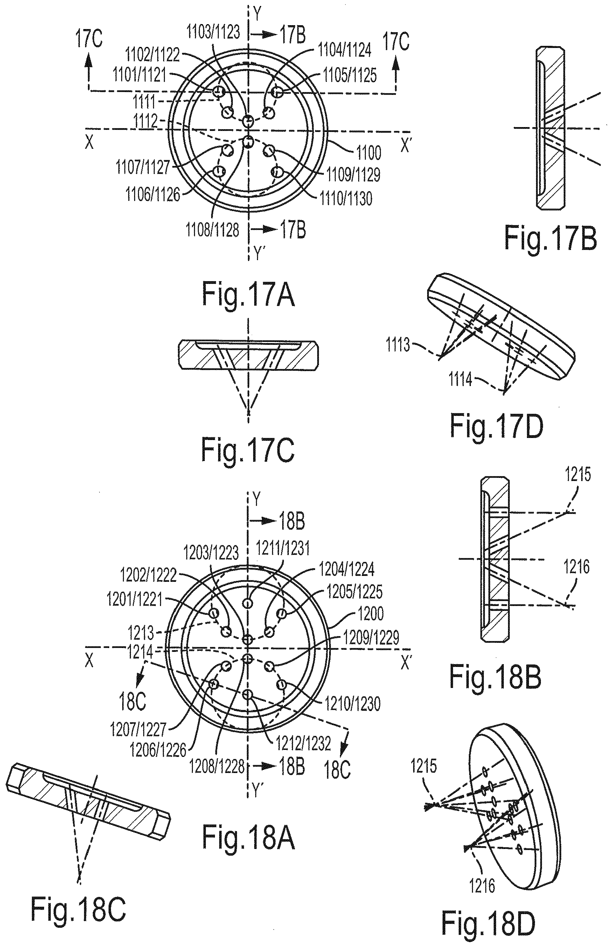

Fig. 17 illustrates an orifice plate 1100 according to an embodiment of the present disclosure. The orifice plate 1100 has similar structure as the orifice plate 500, except for the structure of the fluid passageways and the orifices, which are arranged in two asymmetrical sets with different central axes. The orifice plate 1100 includes ten fluid passageways 1101-1110 and ten orifices 1121-1130 associated with the ten fluid passageways, respectively. All of the fluid passageways have substantially the same diameter, although individually, each of the diameters of the aforesaid fluid passageways may be the same or different. According to this embodiment, the first to fifth orifices 1121-1125 are arranged on an imaginary circle 1111 and the sixth to tenth orifices 1126-1130 are arranged on another imaginary circle 1112, with both imaginary circles having a diameter smaller than the diameter of the orifice plate 1100. The imaginary circles 1111 and 1112 do not share the same center line and are not longitudinally centered on the orifice plate 1100. Specifically, the center line of the imaginary circle 1111 and the center line of the imaginary circle 1112 are both offset equidistantly from the centerline of the plate 1100. Each set of five holes form a colliding set, each with its own asymmetrical pattern. The two sets of five holes are symmetrical mirror images to each other. Within each asymmetrical set, the fluid jets from each passageway substantially impinge on each other at a common focal point relative to each set, such that two focal points 1113 and 1114 are formed for a first set of five jets aligned in imaginary circle 1111 and a second set of five jets aligned in imaginary circle 1112, respectively. The distance from the focal points to the distal surface of the orifice plate can be in the same range as that of the orifice plate 300. An included angle is formed between every two adjacent fluid jets.

Within the first colliding set on imaginary circle 1111, an angle of about 45 degrees is formed between the first orifice 1121 and the second orifice 1122, between the second orifice 1122 and the third orifice 1123, between the third orifice 1123 and the fourth orifice 1124, and between the fourth orifice 1124 and the fifth orifice 1125. An angle of about 180 degrees is formed between the fifth orifice 1125 and the first orifice 1121. Within the second colliding set on imaginary circle 1112, an angle of about 45 degrees is formed between the sixth orifice 1126 and the seventh orifice 1127, between the seventh orifice 1127 and the eighth orifice 1128, between the eighth orifice 1128 and the ninth orifice 1129, and between the ninth orifice 1129 and the tenth orifice 1130. An angle of about 180 degrees is formed between the tenth orifice 1130 and the sixth orifice 1126. However, the angles can be of any suitable combination as long as the sum of the angles is 360 degrees and the orifices are asymmetrically distributed along the imaginary circles. This configuration of the orifices can be referred to as a "split gamma eight minus three" orifice arrangement. The term "split gamma" refers to the two configurations of orifices in two separate imaginary circles. Each configuration defines its own focal point and is adapted individually in an asymmetrical set of five holes. Each asymmetrical set generates a spray plume emitted from the impingement focal point 1113 and 1114, respectively. Each spray plume is biased toward the quadrant or direction, which lacks the corresponding orifice, resulting in two biased sprays, each emitted outward from the each focal point. Due to the unbalanced lateral liquid momentum, each spray plume is biased toward the side of each colliding set between the first orifice 1121 and the fifth orifice 1125 or between the sixth orifice 1126 and the tenth orifice 1130, thereby generating two plumes in the split gamma, or split spray, configuration.

Fig. 18 illustrates an orifice plate 1200 according to another embodiment of the present disclosure. The orifice plate 1200 has similar structure as the orifice plate 1100, except for the structure of the fluid passageways and the orifices. The orifice plate 1200 includes twelve fluid passageways 1201-1212 and twelve orifices 1221-1232 associated with the twelve fluid passageways, respectively. All of the fluid passageways have substantially the same diameter, although individually, each of the diameters of the aforesaid fluid passageways may be the same or different. According to this embodiment, the first to fifth orifices 1221-1225 are arranged on an imaginary circle 1213 and the sixth to tenth orifices 1226-1230 are arranged on another imaginary circle 1214, with both imaginary circles having a diameter smaller than the diameter of the orifice plate 1200. An additional orifice 1231 is located at the center of imaginary circle 1213. An additional orifice 1232 is located at the center of imaginary circle 1214. The imaginary circles 1213 and 1214 do not share the same center line and are not longitudinally centered on the orifice plate 1200. The center lines of the imaginary circles 1213 and 1214 are offset equidistantly from the centerline of the plate 1200. Each set of six holes form a colliding set, each with its own asymmetrical pattern. The two sets of six holes are symmetrical mirror images to each other. Within each asymmetrical set, the fluid jets from each passageway substantially impinge on each other at a common focal point relative to each set. Specifically, two focal points 1215 and 1216 are defined for the colliding sets aligned in imaginary circles 1213 and 1214, respectively. The first colliding set is configured with five jets along the imaginary circle and one jet at the center of the imaginary circle. The second colliding set is configured with five jets along the imaginary circle and one jet at the center of the imaginary circle. According to this embodiment, the sixth and twelfth orifices are perpendicular to the plate, each located at the center of each imaginary circle, respectively. The sixth jet emitted from orifice 1231 impinges on the first through fifth jets emitted from orifices 1221-1225. The twelfth jet emitted from orifice 1232 impinges on the seventh through eleventh jets emitted from orifices 1226-1230. The distance from the focal point to distal surface of the orifice plate can be in the same range as that of the orifice plate 300. An included angle is formed between every two adjacent fluid jets.

Within the first colliding set on imaginary circle 1213, an angle of about 36 degrees is formed between the first orifice 1221 and the second orifice 1222, between the second orifice 1222 and the third orifice 1223, between the third orifice 1223 and the fourth orifice 1224, and between the fourth orifice 1224 and the fifth orifice 1225. At the center of the first colliding set on imaginary circle 1213 is a sixth orifice 1231. An angle of about 216 degrees is formed between the fifth orifice 1225 and the first orifice 1221. Within the second colliding set on imaginary circle 1214, an angle of about 36 degrees is formed between the seventh orifice 1226 and the eighth orifice 1227, between the eighth orifice 1227 and the ninth orifice 1228, between the ninth orifice 1228 and the tenth orifice 1229, and between the tenth orifice 1229 and the eleventh orifice 1230. At the center of the second colliding set on imaginary circle 1214 is a twelfth orifice 1232. An angle of about 216 degrees is formed between the eleventh orifice 1230 and the seventh orifice 1226. However, the angles can be of any suitable combination as long as the sum of the angles is 360 degrees and the orifices are asymmetrically distributed along the imaginary circles. This configuration of the orifices can be referred to as a "split gamma ten minus five plus one" orifice arrangement. The term "split gamma" as used in this expression, refers to the two configurations of orifices in two separate imaginary circles, each with its own focal point. In addition, each set is configured individually in an asymmetrical set of five holes with an additional hole at the center of the imaginary circle. Each asymmetrical set generates a spray plume emitted from each respective impingement focal point 1215 and 1216. Each spray plume is biased toward the quadrant or direction, which lacks the corresponding orifice, resulting in two biased sprays, each emitted outward from the each focal point. Due to the unbalanced lateral liquid momentum, the spray plume is biased toward the side of each colliding set between the first orifice 1221 and the fifth orifice 1225 and between the seventh orifice 1226 and the eleventh orifice 1230, thereby generating two plumes in the split gamma, or split spray, configuration.

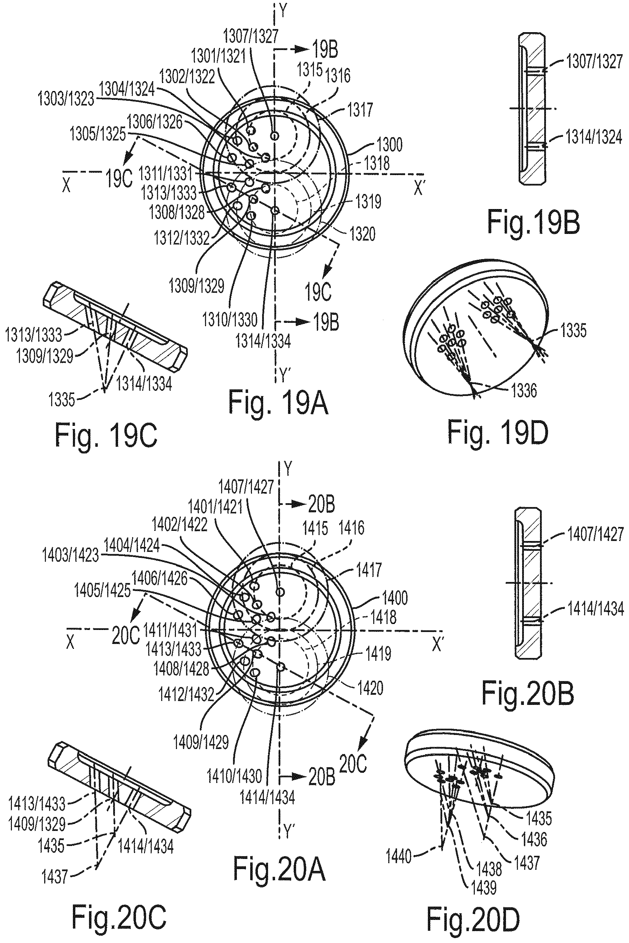

Fig. 19 illustrates an orifice plate 1300 according to another embodiment of the present disclosure. The orifice plate 1300 has similar structure as the orifice plate 1100, except for the structure of the fluid passageways and the orifices, which are arranged in two asymmetrical sets with different central axes, and within each set orifices arranged along three inscribe imaginary circles aligned with the central axis of each set, and, each with a central orifice. The orifice plate 1300 includes fourteen fluid passageways 1301-1314 and fourteen orifices 1321-1334 associated with the fourteen fluid passageways, respectively. All of the fluid passageways have substantially the same diameter, although individually, each of the diameters of the aforesaid fluid passageways may be the same or different. According to this embodiment, the first asymmetrical set includes: the first to third orifices 1321-1323 that are arranged on an imaginary circle 1315; the fourth and fifth orifices 1324-1325 that are arranged on an imaginary circle 1316 which is concentric to circle 1315; the sixth orifice 1326 that is arranged on a third imaginary circle 1317 which is concentric to 1315 and 1316, with both imaginary circles having a diameter smaller than the diameter of the orifice plate 1300; and the seventh orifice 1327 located at the center of the imaginary circles 1315-1317. The second asymmetrical set includes: the eighth to tenth orifices 1328-1330 that are arranged on an imaginary circle 1318; the eleventh and twelfth orifices 1331-1332 that are arranged on an imaginary circle 1319 which is concentric to circle 1318; the thirteenth orifice 1333 that is arranged on a third imaginary circle 1320 which is concentric to 1318 and 1319, with both imaginary circles having a diameter smaller than the diameter of the orifice plate 1300; and a fourteenth orifice 1334 located at the center of the imaginary circles 1318-1320. The imaginary circles 1315-1317 and the imaginary circles 1318-1320 do not share the same center line and are not longitudinally centered on the orifice plate 1300. The center line of the imaginary circle 1315-1317 and the center line of the imaginary circle 1318-1320 are offset equidistantly from the centerline of the plate 1300. The first seven orifices 1321-1327 form a first colliding set. The second seven orifices 1328-1334 form a second colliding set. Each set has its own asymmetrical pattern. The first set and the second set are symmetrical mirror images to the each other. Within each asymmetrical set, the fluid jets from each passageway substantially impinge on each other at a common focal point relative to each set. According to this embodiment, a first focal point 1335 is defined for a first set of seven colliding jets and a second focal point 1336 is defined for a second set of seven colliding jets. Specifically, the first set of seven colliding jets aligned in imaginary circles 1315-1317 includes: three jets along the imaginary circle 1315; two jets along imaginary circle 1316; one jet along imaginary circle 1317; and one jet at the center of the imaginary circles. The second set of seven colliding jests aligned in imaginary circles 1318-1320 includes: three jets along the imaginary circle 1318; two jets along imaginary circle 1319; one jet along imaginary circle 132; and one jet at the center of the imaginary circles. The seventh orifice 1327 and fourteenth orifice 1334 are perpendicular to the plate, located at the center of each set formed by the imaginary circles 1315-1317 and 1318-1320, respectively. The seventh jet emitted from orifice 1327 impinges on the first through sixth jets emitted from orifices 1321-1326, respectively. The fourteenth jet emitted from orifice 1334 impinges on the eighth through thirteenth jets emitted from orifices 1328-1333, respectively. The distance from the focal points to the distal surface of the orifice plate can be in the same range as that of the orifice plate 300. An included angle is formed between every two adjacent fluid jets. The angles formed by each of the orifices intersecting the plate 1300, along each of the imaginary circles within each set, are different. Thus, the single focal point for each colliding set of orifices can be provided.

Within the first colliding set on the imaginary circle 1315, an angle of about 30 degrees is formed between the first orifice 1321 and the second orifice 1322 and between the second orifice 1322 and the third orifice 1323; and an angle of about 300 degrees is formed between the third orifice 1323 and the first orifice 1321. On the imaginary circle 1316, an angle of about 40 degrees is formed between the fourth orifice 1324 and the fifth orifice 1325, and an angle of about 320 degrees is formed between the fifth orifice 1325 and the fourth orifice 1324. On the imaginary circle 1317, a single sixth orifice 1326 is aligned with the second orifice 1322 of the imaginary circle 1315. At the center of the first colliding set on the imaginary circles 1315-1317, a seventh orifice 1327 is provided. The center lines of the orifices aligned on the imaginary circle 1315 and 1317 are radially aligned with respect to the center lines of the orifices on the imaginary circle 1316 by about 20 degrees. Within the second colliding set, on the imaginary circle 1318, an angle of about 30 degrees is formed between the eighth orifice 1328 and the ninth orifice 1329 and also between the ninth orifice 1329 and the tenth orifice 1330; an angle of about 300 degrees is formed between the tenth orifice 1330 and the eighth orifice 1328. On the imaginary circle 1319, an angle of about 40 degrees is formed between the eleventh orifice 1331 and the twelfth orifice 1332; and an angle of about 320 degrees is formed between the twelfth orifice 1332 and the eleventh orifice 1331. On the imaginary circle 1320, a single thirteenth orifice 1333 is aligned with the ninth orifice 1329 of the imaginary circle 1318. At the center of the second colliding set on the imaginary circles 1318-1320, a fourteenth orifice 1334 is provided. The center lines of the orifices aligned in imaginary circle 1318 and 1320 are radially aligned in relation to the center lines of the orifices on imaginary circle 1319 by about 20 degrees. However, the angles can be of any suitable combination as long as the sum of the angles is 360 degrees and the orifices are asymmetrically distributed along the imaginary circles. This configuration of the orifices can be referred to as a "split gamma, single focal point, twelve minus 9, nine minus 7, six minus 5, plus one" orifice arrangement. The term "split gamma", as used in this expression, refers to the two configurations of orifices in two separate colliding sets, each with its own focal point and each set configured individually in an asymmetrical set of six holes along three concentric imaginary circles, with an additional hole at the center of the imaginary circles. The first asymmetrical set generates a spray plume emitted from the first impingement focal point 1335. The second asymmetrical set generates a spray plume emitted from the second impingement focal point 1336. Each spray plume is biased toward the quadrant or direction, which lacks the corresponding orifice. As a result, two separate biased sprays, each emitted outwardly from a respective focal point, are generated. Due to the unbalanced lateral liquid momentum, each spray plume is biased toward the side of each colliding set directly opposite the cluster of orifices 1321-1326 or the cluster of orifices 1328-1333. As a result, two plumes in the split gamma, or two split sprays outward from the center of the plate 1300 and both with downward bend angle, are generated.

Fig. 20 illustrates an orifice plate 1400 according to another embodiment of the present disclosure. The orifice plate 1400 has similar structure as the orifice plate 1300, except for the structure of the fluid passageways and the orifices, which are arranged in two asymmetrical sets with different central axes. Each set of orifices are arranged along three inscribe imaginary circles aligned with a central axis of each set. Each set of orifices has a central orifice. The orifice plate 1400 includes fourteen fluid passageways 1401-1414 and fourteen orifices 1421-1434 associated with the fourteen fluid passageways, respectively. All of the fluid passageways have substantially the same diameter, although individually, each of the diameters of the aforesaid fluid passageways may be the same or different. According to this embodiment, the first asymmetrical set includes: the first to third orifices 1421-1423 arranged on an imaginary circle 1415; the fourth and fifth orifices 1424-1425 arranged on an imaginary circle 1416 that is concentric to circle 1415; the sixth orifice 1426 arranged on a third imaginary circle 1417 that is concentric to 1415 and 1416, with all imaginary circles having a diameter smaller than the diameter of the orifice plate 1400; and the seventh orifice 1427 located at the center of the imaginary circles 1415-1417. The second asymmetrical set includes: the eighth to tenth orifices 1428-1430 arranged on an imaginary circle 1418; the eleventh and twelfth orifices 1431-1432 arranged on an imaginary circle 1419 that is concentric to circle 1418; the thirteenth orifice 1433 arranged on a third imaginary circle 1420 that is concentric to 1418 and 1419, with all imaginary circles having a diameter smaller than the diameter of the orifice plate 1400; and the fourteenth orifice 1434 located at the center of the imaginary circles 1418-1420. The imaginary circles 1415-1417 and the imaginary circles 1418-1420 do not share the same center line and are not longitudinally centered on the orifice plate 1400. The center line of the imaginary circles 1415-1417 and the center line of the imaginary circles 1418-1420 are offset equidistantly from the centerline of the plate 1400. The first set of seven orifices 1421-1427 form a first colliding set having its own asymmetrical pattern. The second set of seven orifices 1428-1434 form a second colliding set having its own asymmetrical pattern. The first set of orifices and the second set of orifices are symmetrical mirror images to each other. Within the first asymmetrical colliding set, the fluid jets from each passageway substantially impinge on each other at first to third focal points 1435-1437 relative to the set. Within the second asymmetrical colliding set, the fluid jets from each passageway substantially impinge on each other at fourth to sixth focal points 1438-1440. For the first colliding set of seven jets aligned in the imaginary circles 1415-1417, three jets from the orifices 1421-1423 along the imaginary circle 1415 impinge on each other and on the jet from the orifice 1427 at the first focal point 1435; two jets from the orifices 1424-1425 along the imaginary circle 1416 impinge on each other and on the jet from the orifice 1427 at the second focal point 1436; one jet from the orifice 1426 along the imaginary circle 1417 impinges on the jet from the orifice 1427 at the third focal point 1437. For the second colliding set of seven jets aligned in the imaginary circles 1418-1420, three jets from the orifices 1428-1430 along the imaginary circle 1418 impinge on each other and on the jet from the orifice 1434 at the fourth focal point 1438; two jets from the orifices 1431-1432 along the imaginary circle 1419 impinge on each other and on the jet from the orifice 1434 at the fifth focal point 1439; and one jet from the orifice 1433 along the imaginary circle 1420 impinges on the jet from the orifice 1434 at the sixth focal point 1440. The resulting focal points are referred to as "stacked focal points", in which the three or more focal points formed along the central axis formed by the imaginary concentric circles of each set of orifices are all located on the longitudinal axis at the center of the concentric imaginary circles. The distance from the focal points to the distal face of the orifice plate can be in the same range as that of the orifice plate 300. An included angle is formed between every two adjacent fluid jets. The angles formed by each of the orifices intersecting the plate 1400, along each of the imaginary circles within each set, are the same. As a result, three focal points for each colliding set of orifices are provided, and each focal point corresponds to the orifices of each imaginary circle.

Within the first colliding set on the imaginary circle 1415, an angle of about 30 degrees is formed between the first orifice 1421 and the second orifice 1422 and between the second orifice 1422 and the third orifice 1423; an angle of about 300 degrees is formed between the third orifice 1423 and the first orifice 1421. On the imaginary circle 1416, an angle of about 40 degrees is formed between the fourth orifice 1424 and the fifth orifice 1425; and an angle of about 320 degrees is formed between the fifth orifice 1425 and the fourth orifice 1424. On the imaginary circle 1417, a single sixth orifice 1426 is aligned with the second orifice 1422 of imaginary circle 1415. At the center of the first colliding set on the imaginary circles 1415-1417, a seventh orifice 1427 is provided. The center lines of the orifices aligned in the imaginary circle 1415 and 1417 are radially aligned with respect to the center lines of the orifices on the imaginary circle 1416 by about 20 degrees. Within the second colliding set, on imaginary circle 1418, an angle of about 30 degrees is formed between the eighth orifice 1428 and the ninth orifice 1429 and between the ninth orifice 1429 and the tenth orifice 1430; an angle of about 300 degrees is formed between the tenth orifice 1430 and the eighth orifice 1428. On the imaginary circle 1419, an angle of about 40 degrees is formed between the eleventh orifice 1431 and the twelfth orifice 1432; an angle of about 320 degrees is formed between the twelfth orifice 1432 and the eleventh orifice 1431. On the imaginary circle 1420, a single thirteenth orifice 1433 is aligned with the ninth orifice 1429 of the imaginary circle 1418. At the center of the second colliding set on the imaginary circles 1418-1420, a fourteenth orifice 1334 is provided. The center lines of the orifices aligned in the imaginary circle 1418 and 1420 are radially aligned with respect to the center lines of the orifices on the imaginary circle 1419 by about 20 degrees. However, the angles can be of any suitable combination as long as the sum of the angles is 360 degrees and the orifices are asymmetrically distributed along the imaginary circles. This configuration of the orifices can be referred to as a "split gamma, stacked focal point, twelve minus 9, nine minus 7, six minus 5, plus one" orifice arrangement. The term "split gamma" refers to the two configurations of orifices in two separate colliding sets, each with three stacked focal points and each set configured individually in an asymmetrical set of six holes along three concentric imaginary circles, with an additional hole at the center of the imaginary circles. Each of the asymmetrical sets generates a spray plume emitted from each respective impingement focal points 1435-1437 and 1338-1440, respectively. Each spray plume is biased toward the quadrant or direction, which lacks the corresponding orifice. As a result, two separate biased sprays, each emitted outward from each focal point are generated. Due to the unbalanced lateral liquid momentum, each spray plume is biased toward the side of each colliding set directly opposite the cluster of orifices 1421-1426 and directly opposite the cluster of orifices 1428-1433. As a result, two plumes in the split gamma, or two split sprays outward from the center of the plate 1400 and both with downward bend angle, are generated.

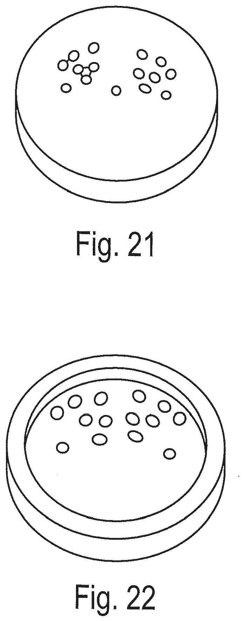

Fig. 21 is an image of the distal side of the orifice plate 1300. Fig. 22 is an image of the proximal side of the orifice plate 1300.

Although the above-described orifice plates 1100-1400 each have two colliding sets of orifices for generating two spray plumes, the present disclosure encompass orifice plates that have more colliding sets of orifices. For example, the orifice plates can have three colliding sets of orifices for generating three spray plumes each having a central axis; each colliding set can have orifices aligned on between one and six imaginary circles, which circles may or not be concentric to another; each colliding set can have between two and twenty-six holes; and each colliding set can have between one and six focal points, which focal points may or not be along the same axis. For example, the orifice plates can have four colliding sets of orifices for generating three spray plumes each having a central axis; each colliding set can have orifices aligned on between one and six imaginary circles, which circles may or not be concentric to another; each colliding set can have between two and twenty-six holes; and each colliding set can have between one and six focal points, which focal points may or not be along the same axis.

The orifice plate may be useful for a variety of fluids, such as liquid fuels, oxidizers, fuel-alcohol blends including Ethanol blends ranging from E0 to E100, water, salt, urea, adhesive, finish coatings, paint, lubricants or any solutions or mixtures therein. For example, the fluid can be a volatile fuel of any gasoline-alcohol blends including E0, E1, E2, E3, E4, E5, E6, E7, E8, E9, E10, E15, E20, E25, E30, E40, E50, E60, E70, E75, E85, E90, E95, E97, E98, E99, E100. The fluid can be water and alcohol and any mixture therein. The fluid can be water and salt, and any mixture therein. The fluid can be water and urea, and any mixture therein.

Accordingly, the orifice plate may be constructed of any grade of steel, aluminum, brass, copper, alloys therein, composites including graphite, ceramic, carbon or fiber blends, or a multitude of plastic chemistries.

Although the disclosure has been described with respect to the exemplary embodiments in view of Figs. 1-14, it should be understood that the disclosure is not limited to the embodiments. Rather, the disclosure encompasses the inventive concept of providing two or more (up to nineteen) orifices for an orifice plate used in connection with a fuel injector of an internal combustion engine. For example, the number of orifices can be in a range of 2 to 19.

Furthermore, with respect to these additional embodiments referred to in the previous paragraphs, the angle(s) between each of these adjacent orifices can range from about 18 degrees to about 342 degrees and the angles may be the same or different. Furthermore, in embodiments, each of the aforesaid angles may be the same or different. Each orifice can be equiangular with respect to another orifice or other orifices. Alternatively, each orifice can also be non-equiangular with respect to another orifice or other orifices. Alternatively, the orifices can be a combination of equiangular orifices and non-equiangular orifices. For example, the above angle(s) can be about 18.00°, 18.95°, 19.00°, 20.00°, 21.00°, 21.18°, 22.00°, 22.50°, 23.00°, 24.00°, 25.00 °, 25.71°, 26.00°, 27.00°, 27.69°, 28.00°, 29.00°, 30.00°, 31.00°, 32.00°, 32.73°, 33.00°, 34.00°, 35.00°, 36.00°, 37.00°, 37.89°, 38.00°, 39.00°, 40.00°, 42.35°, 45.00°, 48.00°, 50.00°, 51.43°, 52.00°, 53.00°, 54.00°, 55.38°, 56.84°, 60.00°, 62.00°, 63.53°, 65.45°, 67.50°, 72.00°, 75.00°, 75.79°, 77.14°, 80.00°, 83.08°, 84.71°, 90.00°, 94.74°, 96.00°, 98.18°, 100.00°, 102.86°, 105.88°, 108.00°,110.77°, 112.50°, 113.68°, 120.00°, 126.00°, 127.06°, 128.57°, 130.91°, 132.63°, 135.00°, 138.46°, 140.00°, 144.00°, 148.24°, 150.00°, 151.58°, 154.29°, 157.50°, 160.00°, 162.00°, 163.64°, 166.15°, 168.00°, 169.41°, 170.53°, 180.00°, 190.00°, 190.59°, 192.00°, 193.85°, 196.36°, 200.00°, 202.50°, 205.71°, 210.00°, 216.00°, 221.54°, 225.00°, 229.09°, 231.43°, 240.00°, 249.23°, 252.00°, 257.14°, 261.82°, 270.00°, 280.00°, 288.00°, 294.55°, 300.00°, 308.57°, 315.00°, 320.00°, 324.00°, 325.00°, 330.00°, 335.00°, 340.00°, and 342.00° degrees.

Further described herein is a method of spray targeting and plume shaping for colliding jets is provided. The colliding jets pass through and are guided by an orifice plate (such as, the orifice plates 300-1000 as described previously), such that the colliding jets are not radially symmetry along the central axis of the orifice plate. The asymmetry distribution of the colliding jets causes biasing of the center line of the spray plume center line. As a result, the center line is not parallel to the central longitudinal axis. A plurality of orifices is provided to produce fluid jets. The fluid jets impinge on each other to form a focal point, which is distanced from the exit face of the orifice plate and is positioned along the central axis of the orifice plate. The asymmetrical arrangement of the colliding jets result in unbalanced lateral momentum components. The asymmetrical arrangement of the colliding jets also results in a corresponding spray plume emitted from the focal point, which is biased radially toward the area of least lateral momentum, or conversely, away from the side with most lateral momentum.

Further described herein is a method of spray targeting and plume shaping for colliding jets is provided. The colliding jets pass through and are guided by an orifice plate (such as, the orifice plates 1100-1400 as described previously), such that the colliding jets are clustered into asymmetrical colliding sets, which sets are not aligned along the central axis of the orifice plate. The asymmetrical distribution, which can be executed within multiple concentric imaginary circles and aligned in each colliding set, causes compound biasing of the center line of the spray plumes. As a result, the center line of each two or more spray plumes is not parallel to the central longitudinal axis of the plate; rather, the centerline can be compound to the plate, with two or more plumes targeted away from the central axis and from each other.

Accordingly, the spray plume can be selectively shaped to one or more plume sections, which are other than a conical section. The plume sections can be perpendicular to the spray plume centerline and can have cross sections that are linear, oval, concave polygonal, convex polygonal, regular or irregular, or a multitude of freehand shapes desirable for a particular application.

Accordingly, the spray plume can be selectively shaped to generate a split gamma, or split spray pattern, which plume sprays at a compound angle from the plate, with both a bend angle, or a bias in the same direction as the other, and a gamma angle, or an angle that splits the two or more plumes away from the other.

The method can be applied to colliding jets used with a nozzle, an orifice plate, and/or an insert for fluid fitting and channeling. The method can also be applied to an injector with metering means of providing a precise quantity of liquid flow at a precise start and stop time.

The method can be used with a wide variety of fluids, including but not limited to liquid fuels, oxidizers, fuel-alcohol blends including Ethanol blends ranging from E0 to E100, water, salt, urea, adhesive, finish coatings, paint, lubricants or any solutions or mixtures thereof.

## Claims

1. An injector nozzle used with an internal combustion engine for guiding and shaping a fluid flow, comprising:
a nozzle body comprising an inlet for admitting the fluid flow and an outlet; and
a fluid flow guide in fluid communication with the outlet of the nozzle body, wherein the fluid flow guide comprises a plurality of fluid passageways (1102-1110) for creating a plurality of stream jets, wherein each passageway has an orifice (1121-1130) through which a respective stream jet is discharged from a respective passageway,
wherein the plurality of fluid passageways comprises: a first group of fluid passageways and a first group of orifices (1121-1125) corresponding to the first group of fluid passageways, respectively; and a second group of fluid passageways and a second group of orifices (1126-1130) corresponding to the second group of fluid passageways, respectively;
wherein imaginary extensions of the first group of passageways converge to create at least one first focal point (1113), such that the plurality of stream jets passing through the first group of passageways impinge on each other to form a first spray plume,
wherein imaginary extensions of the second group of passageways converge to create at least one second focal point (1114), such that the plurality of stream jets passing through the second group of passageways impinge on each other to form a second spray plume,
**characterized in that**
the first group of orifices are arranged on a first imaginary circle (1111) on an exterior surface of the fluid flow guide, wherein the first group of orifices are radially asymmetrically distributed on the first imaginary circle with respect to the central axis of the first imaginary circle, and
the second group of orifices are arranged on a second imaginary circle (1112) on the exterior surface of the fluid flow guide, wherein the second group of orifices are radially asymmetrically distributed on the second imaginary circle with respect to the central axis of the second imaginary circle.

2. The injector nozzle according to claim 1, wherein the fluid flow guide has a central axis and the central axis of the first imaginary circle (1111) and the central axis of the second imaginary circle (1112) are both offset from the central axis of the fluid flow guide.

3. The injector nozzle according to claim 1 or 2, wherein:
the first group of orifices (1121-1125) comprises first to fifth orifices,
the first and second orifices, the second and third orifices, the third and fourth orifices, and the fourth and fifth orifices are angularly spaced from each other by about 45°, and
the first orifice and the fifth orifice are angularly spaced from each other by about 180°.

4. The injector nozzle according to claim 1, 2 or 3, wherein:
the second group of orifices (1126-1130) comprises first to fifth orifices,
the first and second orifices, the second and third orifices, the third and fourth orifices, and the fourth and fifth orifices are angularly spaced from each other by about 45°, and
the first orifice and the fifth orifice are angularly spaced from each other by about 180°.

5. The injector nozzle according to claim 1 or 2, wherein:
the first group of orifices (1121-1125) comprises first to fifth orifices,
the first and second orifices, the second and third orifices, the third and fourth orifices, and the fourth and fifth orifices are angularly spaced from each other by about 36°,
the first orifice and the fifth orifice are angularly spaced from each other by about 216°,
the fluid flow guide further comprises a first central fluid passageway passing through the central axis of the first imaginary circle (1111), and the first central fluid passageway has a first central orifice on the exterior surface of the fluid flow guide, and
imaginary extension the first central fluid passageway converges with the imaginary extensions of the first group of fluid passageway at the at least one first focal point (1113), such that the stream jet passing through the first central fluid passageway impinges the stream jets passing through the first group of the fluid passageways to form the first spray plume.

6. The injector nozzle according to claim 1, 2 or 3, wherein:
the second group of orifices (1126-1130) comprises first to fifth orifices,
the first and second orifices, the second and third orifices, the third and fourth orifices, and the fourth and fifth orifices are angularly spaced from each other by about 36°,
the first orifice and the fifth orifice are angularly spaced from each other by about 216°,
the fluid flow guide further comprises a second central fluid passageway passing through the central axis of the second imaginary circle (1112), and the second central fluid passageway has a second central orifice on the exterior surface of the fluid flow guide, and
imaginary extension of the second central fluid passageway converges with the imaginary extensions of the second group of fluid passageway at the at least one second focal point (1114), such that the stream jet passing through the second central fluid passageway impinges the stream jets passing through the second group of the fluid passageways to form the second spray plume.

7. The injector nozzle according to claim 1 or 2,
wherein the first group of fluid passageways comprises:
a first subgroup of passageways and a first subgroup of orifices corresponding to the first subgroup of fluid passageways, respectively, wherein the first subgroup of orifices are arranged on a first imaginary circle on an exterior surface of the fluid flow guide, wherein the first subgroup of orifices are radially asymmetrically distributed on the first imaginary circle with respect to the central axis of the first imaginary circle;
a second subgroup of passageways and a second subgroup of orifices corresponding to the second subgroup of fluid passageways, respectively, wherein the second subgroup of orifices are arranged on a second imaginary circle on the exterior surface of the fluid flow guide, wherein the second subgroup of orifices are radially asymmetrically distributed on the second imaginary circle with respect to the central axis of the second imaginary circle;
a third subgroup of at least one passageway and a third subgroup of at least one orifice corresponding to the third subgroup of at least one passageway, respectively, wherein the third subgroup of at least one orifice is arranged on a third imaginary circle on the exterior surface of the fluid flow guide, wherein the third subgroup of at least one orifice is radially asymmetrically distributed on the third imaginary circle with respect to the central axis of the third imaginary circle;
wherein the first imaginary circle, the second imaginary circle and the third imaginary circle are concentric; and
a first central passageway passing through the central axis of the first to third imaginary circles and a first central orifice corresponding to the first central passageway,
wherein imaginary extensions of the first subgroup of passageways, imaginary extensions of the second subgroup of passageways, imaginary extensions of the third subgroup of at least one passageway and imaginary extension of the first central passageway converge to create at least one first focal point, such that the plurality of stream jets passing through the first group of passageways impinge on each other to form a first spray plume.

8. The injector nozzle according to claim 7,
wherein the second group of fluid passageways comprises:
a fourth subgroup of passageways and a fourth subgroup of orifices corresponding to the fourth subgroup of fluid passageways, respectively, wherein the fourth subgroup of orifices are arranged on a fourth imaginary circle on an exterior surface of the fluid flow guide, wherein the fourth subgroup of orifices are radially asymmetrically distributed on the fourth imaginary circle with respect to the central axis of the fourth imaginary circle;
a fifth subgroup of passageways and a fifth subgroup of orifices corresponding to the fifth subgroup of fluid passageways, respectively, wherein the fifth subgroup of orifices are arranged on a fifth imaginary circle on the exterior surface of the fluid flow guide, wherein the fifth subgroup of orifices are radially asymmetrically distributed on the fifth imaginary circle with respect to the central axis of the fifth imaginary circle;
a sixth subgroup of at least one passageway and a sixth subgroup of at least one orifice corresponding to the sixth subgroup of at least one passageway, respectively, wherein the sixth subgroup of at least one orifice is arranged on a sixth imaginary circle on the exterior surface of the fluid flow guide, wherein the sixth subgroup of at least one orifice is radially asymmetrically distributed on the third imaginary circle with respect to the central axis of the third imaginary circle;
wherein the fourth imaginary circle, the fifth imaginary circle and the sixth imaginary circle are concentric; and
a second central passageway passing through the central axis of the fourth to sixth imaginary circles and a second central orifice corresponding to the second central passageway,
wherein imaginary extensions of the fourth subgroup of passageways, the imaginary extensions of the fifth subgroup of passageways, the imaginary extensions of the sixth subgroup of at least one passageway and the imaginary extension of the second central passageway converge to create at least one second focal point, such that the plurality of stream jets passing through the second group of passageways impinge on each other to form a second spray plume.

9. The injector nozzle according to claim 8,
wherein the fourth subgroup of orifices comprises a sixth orifice, a seventh orifice and a eighth orifice, wherein the sixth and seventh orifices are angularly spaced from each other by about 30°, wherein the seventh and eighth orifices are angularly spaced from each other by about 30°, and wherein the sixth and eighth orifices are angularly spaced from each other by about 300°; and
wherein the fifth subgroup of orifices comprises a ninth orifice and a tenth orifice angularly spaced from each other by about 40°.

10. The injector nozzle according to claim 7,
wherein the first subgroup of orifices comprises a first orifice, a second orifice and a third orifice, wherein the first and second orifices are angularly spaced from each other by about 30°, wherein the second and third orifices are angularly spaced from each other by about 30°, and wherein the first and third orifices are angularly spaced from each other by about 300°; and
wherein the second subgroup of orifices comprises a fourth orifice and a fifth orifice angularly spaced from each other by about 40°.

11. The injector nozzle according to claim 7,
wherein the at least one first focal point comprises a first group of three focal points;
wherein the first one of the first group of three focal points is formed by the convergence of the imaginary extensions of the first subgroup of passageways and the imaginary extension of the first central passageway;
wherein the second one of the first group of three focal points is formed by the convergence of the imaginary extensions of the second subgroup of passageways and the imaginary extension of the first central passageway; and
wherein the third one of the first group of three focal points is formed by the convergence of the imaginary extensions of the third subgroup of passageways and the imaginary extension of the first central passageway.

12. The injector nozzle according to claim 8,
wherein the at least one second focal point comprises a second group of three focal points;
wherein the first one of the second group of three focal points is formed by the convergence of the imaginary extensions of the fourth subgroup of passageways and the imaginary extension of the second central passageway;
wherein the second one of the second group of three focal points is formed by the convergence of the imaginary extensions of the fifth subgroup of passageways and the imaginary extension of the second central passageway; and
wherein the third one of the second group of three focal points is formed by the convergence of the imaginary extensions of the sixth subgroup of passageways and the imaginary extension of the second central passageway.

## Patentansprüche

1. Einspritzdüse, die mit einem Verbrennungsmotor verwendet wird, zum Führen und Formen einer Flüssigkeitsströmung, umfassend:
einen Düsenkörper, der einen Einlass für den Einlass der Flüssigkeitsströmung sowie einen Auslass umfasst; und
eine Flüssigkeitsströmungsführung in fließender Kommunikation mit dem Auslass des Düsenkörpers,
wobei die Flüssigkeitsströmungsführung eine Mehrzahl von Flüssigkeitsgängen (1102-1110) zur Erzeugung einer Mehrzahl von Strömungsstrahlen umfasst, wobei jeder Gang eine Öffnung (1121-1130) besitzt, durch die ein zugehöriger Strömungsstrahl aus einem zugehörigen Gang ausgestoßen wird,
wobei die Mehrzahl von Flüssigkeitsgängen umfasst: eine erste Gruppe von Flüssigkeitsgängen und eine erste Gruppe von Öffnungen (1121-1125), die mit der ersten Gruppe von Flüssigkeitsgängen korrespondieren, und eine zweite Gruppe von Flüssigkeitsgängen und eine zweite Gruppe von Öffnungen (1126-1130), die mit der zweiten Gruppe von Flüssigkeitsgängen korrespondieren,
wobei imaginäre Verlängerungen der ersten Gruppe von Gängen unter Bildung von wenigstens einem ersten Kontaktpunkt (1113) konvergieren, so dass die Mehrzahl von Strömungsstrahlen, die durch die erste Gruppe von Gängen gehen, unter Bildung einer ersten Sprühfahne aufeinandertreffen,
wobei imaginäre Verlängerungen der zweiten Gruppe von Gängen unter Bildung von wenigstens einem zweiten Kontaktpunkt (1113) konvergieren, so dass die Mehrzahl von Strömungsstrahlen, die durch die zweite Gruppe von Gängen gehen, unter Bildung einer zweiten Sprühfahne aufeinandertreffen,
**dadurch gekennzeichnet, dass**
die erste Gruppe von Öffnungen auf einem ersten imaginären Kreis (1111) auf einer Außenfläche der Flüssigkeitsströmungsführung angeordnet sind, wobei die erste Gruppe von Öffnungen, bezogen auf die Mittelachse des ersten imaginären Kreises, radial asymmetrisch auf dem ersten imaginären Kreis verteilt sind, und
die zweite Gruppe von Öffnungen auf einem zweiten imaginären Kreis (1112) auf der Außenfläche der Flüssigkeitsströmungsführung angeordnet sind, wobei die zweite Gruppe von Öffnungen, bezogen auf die Mittelachse des zweiten imaginären Kreises, radial asymmetrisch auf dem zweiten imaginären Kreis verteilt sind.

2. Einspritzdüse gemäß Anspruch 1, wobei die Flüssigkeitsströmungsführung eine Mittelachse besitzt und sowohl die Mittelachse des ersten imaginären Kreises (1111) als auch die Mittelachse des zweiten imaginären Kreises (1112) von der Mittelachse der Flüssigkeitsströmungsführung versetzt sind.

3. Einspritzdüse gemäß Anspruch 1 oder 2, wobei:
die erste Gruppe von Öffnungen (1121-1125) erste bis fünfte Öffnungen umfasst,
die erste und die zweite Öffnung, die zweite und die dritte Öffnung, die dritte und die vierte Öffnung, und die vierte und die fünfte Öffnung einen Winkelabstand von etwa 45° zueinander besitzen, und
die erste Öffnung und die fünfte Öffnung einen Winkelabstand von etwa 180° zueinander besitzen.

4. Einspritzdüse gemäß Anspruch 1, 2 oder 3, wobei:
die zweite Gruppe von Öffnungen (1126-1130) erste bis fünfte Öffnungen umfasst,
die erste und die zweite Öffnung, die zweite und die dritte Öffnung, die dritte und die vierte Öffnung, und die vierte und die fünfte Öffnung einen Winkelabstand von etwa 45° zueinander besitzen, und
die erste Öffnung und die fünfte Öffnung einen Winkelabstand von etwa 180° zueinander besitzen.

5. Die Einspritzdüse gemäß Anspruch 1 oder 2, wobei:
die erste Gruppe von Öffnungen (1121-1125) erste bis fünfte Öffnungen umfasst,
die erste und die zweite Öffnung, die zweite und die dritte Öffnung, die dritte und die vierte Öffnung, und die vierte und die fünfte Öffnung einen Winkelabstand von etwa 36° zueinander besitzen,
die erste Öffnung und die fünfte Öffnung einen Winkelabstand von etwa 216° zueinander besitzen,
die Flüssigkeitsströmungsführung ferner einen ersten mittigen Flüssigkeitsgang umfasst, der durch die Mittelachse des ersten imaginären Kreises (1111) verläuft, und der erste mittige Flüssigkeitsgang eine erste mittige Öffnung auf der Außenfläche der Flüssigkeitsströmungsführung besitzt, und
die imaginäre Verlängerung des ersten mittigen Flüssigkeitsgangs mit den imaginären Verlängerungen der ersten Gruppe von Flüssigkeitsgängen am wenigstens einen ersten Kontaktpunkt (1113) konvergiert, so dass der durch den ersten mittigen Flüssigkeitsgang gehende Strömungsstrahl auf die durch die erste Gruppe der Flüssigkeitsgänge gehenden Strömungsstrahlen trifft, unter Bildung der ersten Sprühfahne.

6. Einspritzdüse gemäß Anspruch 1, 2 oder 3, wobei:
die zweite Gruppe von Öffnungen (1126-1130) erste bis fünfte Öffnungen umfasst,
die erste und die zweite Öffnung, die zweite und die dritte Öffnung, die dritte und die vierte Öffnung, und die vierte und die fünfte Öffnung einen Winkelabstand von etwa 36° zueinander besitzen,
die erste Öffnung und die fünfte Öffnung einen Winkelabstand von etwa 216° zueinander besitzen,
die Flüssigkeitsströmungsführung ferner einen zweiten mittigen Flüssigkeitsgang umfasst, der durch die Mittelachse des zweiten imaginären Kreises (1112) verläuft, und der zweite mittige Flüssigkeitsgang eine zweite mittige Öffnung auf der Außenfläche der Flüssigkeitsströmungsführung besitzt, und
die imaginäre Verlängerung des zweiten mittigen Flüssigkeitsgangs mit den imaginären Verlängerungen der zweiten Gruppe von Flüssigkeitsgängen am wenigstens einen zweiten Kontaktpunkt (1114) konvergiert, so dass der durch den zweiten mittigen Flüssigkeitsgang gehende Strömungsstrahl auf die durch die zweite Gruppe der Flüssigkeitsgänge gehenden Strömungsstrahlen trifft, unter Bildung der zweiten Sprühfahne.

7. Einspritzdüse gemäß Anspruch 1 oder 2,
wobei die erste Gruppe von Flüssigkeitsgängen umfasst:
eine erste Untergruppe von Gängen und eine erste Untergruppe von Öffnungen, die zur ersten Untergruppe von Flüssigkeitsgängen gehören, wobei die erste Untergruppe von Öffnungen auf einem ersten imaginären Kreis auf einer Außenfläche der Flüssigkeitsströmungsführung angeordnet sind, wobei die erste Untergruppe von Öffnungen, bezogen auf die Mittelachse des ersten imaginären Kreises, radial asymmetrisch auf dem ersten imaginären Kreis verteilt ist;
eine zweite Untergruppe von Gängen und eine zweite Untergruppe von Öffnungen, die zur zweiten Untergruppe von Flüssigkeitsgängen gehören, wobei die zweite Untergruppe von Öffnungen auf einem zweiten imaginären Kreis auf der Außenfläche der Flüssigkeitsströmungsführung angeordnet sind, wobei die zweite Untergruppe von Öffnungen, bezogen auf die Mittelachse des zweiten imaginären Kreises, radial asymmetrisch auf dem zweiten imaginären Kreis verteilt sind;
eine dritte Untergruppe von wenigstens einem Gang und eine dritte Untergruppe von wenigstens einer Öffnung, die zur dritten Untergruppe von wenigstens einem Gang gehört, wobei die dritte Untergruppe von wenigstens einer Öffnung auf einem dritten imaginären Kreis auf der Außenfläche der Flüssigkeitsströmungsführung angeordnet sind, wobei die dritte Untergruppe von wenigstens einer Öffnung, bezogen auf die Mittelachse des dritten imaginären Kreises, radial asymmetrisch auf dem dritten imaginären Kreis verteilt ist;
wobei der erste imaginäre Kreis, der zweite imaginäre Kreis und der dritte imaginäre Kreis konzentrisch sind; und
ein erster mittiger Gang durch die Mittelachse der ersten bis dritten imaginären Kreise und eine erste mittige Öffnung, die zum ersten mittigen Gang gehört, verläuft,
wobei imaginäre Verlängerungen der ersten Untergruppe von Gängen, imaginäre Verlängerungen der zweiten Untergruppe von Gängen, imaginäre Verlängerungen der dritten Untergruppe von wenigstens einem Gang und eine imaginäre Verlängerung des ersten mittigen Gangs unter Bildung von wenigstens einem ersten Kontaktpunkt konvergieren, so dass die Mehrzahl von durch die erste Gruppe von Gängen gehenden Strömungsstrahlen unter Bildung einer ersten Sprühfahne aufeinandertreffen.

8. Die Einspritzdüse gemäß Anspruch 7,
wobei die zweite Gruppe von Flüssigkeitsgängen umfasst:
eine vierte Untergruppe von Gängen und eine vierte Untergruppe von Öffnungen, die zur vierten Untergruppe von Flüssigkeitsgängen gehören, wobei die vierte Untergruppe von Öffnungen auf einem vierten imaginären Kreis auf einer Außenfläche der Flüssigkeitsströmungsführung angeordnet sind, wobei die vierte Untergruppe von Öffnungen, bezogen auf die Mittelachse des vierten imaginären Kreises, radial asymmetrisch auf dem vierten imaginären Kreis verteilt sind;
eine fünfte Untergruppe von Gängen und eine fünfte Untergruppe von Öffnungen, die zur fünften Untergruppe von Flüssigkeitsgängen gehören, wobei die fünfte Untergruppe von Öffnungen auf einem fünften imaginären Kreis auf der Außenfläche der Flüssigkeitsströmungsführung angeordnet sind, wobei die fünfte Untergruppe von Öffnungen, bezogen auf die Mittelachse des fünften imaginären Kreises, radial asymmetrisch auf dem fünften imaginären Kreis verteilt sind;
eine sechste Untergruppe von wenigstens einem Gang und eine sechste Untergruppe von wenigstens einer Öffnung, die zur sechsten Untergruppe von wenigstens einem Gang gehört, wobei die sechste Untergruppe von wenigstens einer Öffnung auf einem sechsten imaginären Kreis auf der Außenfläche der Flüssigkeitsströmungsführung angeordnet ist, wobei die sechste Untergruppe von wenigstens einer Öffnung, bezogen auf die Mittelachse des dritten imaginären Kreises, radial asymmetrisch auf dem dritten imaginären Kreis verteilt ist;
wobei der vierte imaginäre Kreis, der fünfte imaginäre Kreis und der sechste imaginäre Kreis konzentrisch sind; und
ein zweiter mittiger Gang durch die Mittelachse der vierten bis sechsten imaginären Kreise und eine zweite mittige Öffnung, die zum zweiten mittigen Gang gehört, verläuft,
wobei imaginäre Verlängerungen der vierten Untergruppe von Gängen, imaginäre Verlängerungen der fünfte Untergruppe von Gängen, imaginäre Verlängerungen der sechsten Untergruppe von wenigstens einem Gang und die imaginäre Verlängerung des zweiten mittigen Gangs unter Bildung von wenigstens einem zweiten Kontaktpunkt konvergieren, so dass die Mehrzahl von durch die zweite Gruppe von Gängen gehenden Strömungsstrahlen unter Bildung einer zweiten Sprühfahne aufeinandertreffen.

9. Einspritzdüse gemäß Anspruch 8,
wobei die vierte Untergruppe von Öffnungen eine sechste Öffnung, eine siebte Öffnung und eine achte Öffnung umfasst, wobei die sechste und die siebte Öffnung einen Winkelabstand von etwa 30° zueinander besitzen, wobei die siebte und die achte Öffnung einen Winkelabstand von etwa 30° zueinander besitzen, und wobei die sechste und die achte Öffnung einen Winkelabstand von etwa 300° zueinander besitzen; und
wobei die fünfte Untergruppe von Öffnungen eine neunte Öffnung und eine zehnte Öffnung umfasst, die einen Winkelabstand von etwa 40° zueinander besitzen.

10. Einspritzdüse gemäß Anspruch 7,
wobei die erste Untergruppe von Öffnungen eine erste Öffnung, eine zweite Öffnung und eine dritte Öffnung umfasst, wobei die erste und die zweite Öffnung einen Winkelabstand von etwa 30° zueinander besitzen, wobei die zweite und die dritte Öffnung einen Winkelabstand von etwa 30° zueinander besitzen, und wobei die erste und die dritte Öffnung einen Winkelabstand von etwa 300° zueinander besitzen; und
wobei die zweite Untergruppe von Öffnungen eine vierte Öffnung und eine fünfte Öffnung umfasst, die einen Winkelabstand von etwa 40° zueinander besitzen.

11. Einspritzdüse gemäß Anspruch 7,
wobei der wenigstens eine erste Kontaktpunkt eine erste Gruppe von drei Kontaktpunkten umfasst,
wobei der erste der ersten Gruppe von drei Kontaktpunkten durch die Konvergenz der imaginären Verlängerungen der ersten Untergruppe von Gängen und der imaginären Verlängerung des ersten mittigen Gangs gebildet wird,
wobei der zweite der ersten Gruppe von drei Kontaktpunkten durch die Konvergenz der imaginären Verlängerungen der zweiten Untergruppe von Gängen und der imaginären Verlängerung des ersten mittigen Gangs gebildet wird, und
wobei der dritte der ersten Gruppe von drei Kontaktpunkten durch die Konvergenz der imaginären Verlängerungen der dritten Untergruppe von Gängen und der imaginären Verlängerung des ersten mittigen Gangs gebildet wird.

12. Einspritzdüse gemäß Anspruch 8,
wobei der wenigstens eine zweite Kontaktpunkt eine zweite Gruppe von drei Kontaktpunkten umfasst,
wobei der erste der zweiten Gruppe von drei Kontaktpunkten durch die Konvergenz der imaginären Verlängerungen der vierten Untergruppe von Gängen und der imaginären Verlängerung des zweiten mittigen Gangs gebildet wird,
wobei der zweite der zweiten Gruppe von drei Kontaktpunkten durch die Konvergenz der imaginären Verlängerungen der fünften Untergruppe von Gängen und der imaginären Verlängerung des zweiten mittigen Gangs gebildet wird, und
wobei der dritte der zweiten Gruppe von drei Kontaktpunkten durch die Konvergenz der imaginären Verlängerungen der sechsten Untergruppe von Gängen und der imaginären Verlängerung des zweiten mittigen Gangs gebildet wird.

## Revendications

1. Buse d'injecteur utilisée avec un moteur à combustion interne pour guider et mettre en forme un écoulement de fluide, comprenant :
un corps de buse comprenant une entrée pour admettre l'écoulement de fluide et une sortie ; et
un guide d'écoulement de fluide en communication fluidique avec la sortie du corps de buse, le guide d'écoulement de fluide comprenant une pluralité de passages de fluide (1102-1110) pour créer une pluralité de jets de flux, chaque passage comportant un orifice (1121-1130) à travers lequel un jet de flux respectif est déchargé à partir d'un passage respectif,
dans laquelle la pluralité de passages de fluide comprend : un premier groupe de passages de fluide et un premier groupe d'orifices (1121-1125) correspondant respectivement au premier groupe de passages de fluide : et un second groupe de passages de fluide et un second groupe d'orifices (1126-1130) correspondant respectivement au second groupe de passages de fluide ;
dans laquelle des prolongements imaginaires du premier groupe de passages convergent pour créer au moins un premier point focal (1113), de telle sorte que les jets de la pluralité de jets de flux passant à travers le premier groupe de passages entrent mutuellement en collision pour former un premier panache de pulvérisation,
dans laquelle des prolongements imaginaires du second groupe de passages convergent pour créer au moins un deuxième point focal (1114), de telle sorte que les jets de la pluralité de jets de flux passant à travers le second groupe de passages entrent mutuellement en collision pour former un second panache de pulvérisation,
**caractérisée en ce que**
le premier groupe d'orifices est disposé sur un premier cercle imaginaire (1111) sur une surface extérieure du guide d'écoulement de fluide, le premier groupe d'orifices étant réparti radialement de manière asymétrique sur le premier cercle imaginaire par rapport à l'axe central du premier cercle imaginaire, et
le second groupe d'orifices est disposé sur un deuxième cercle imaginaire (1112) sur la surface extérieure du guide d'écoulement de fluide, le second groupe d'orifices étant réparti radialement de manière asymétrique sur le deuxième cercle imaginaire par rapport à l'axe central du deuxième cercle imaginaire.

2. Buse d'injecteur selon la revendication 1, dans laquelle le guide d'écoulement de fluide présente un axe central et l'axe central du premier cercle imaginaire (1111) et l'axe central du deuxième cercle imaginaire (1112) sont tous les deux décalés par rapport à l'axe central du guide d'écoulement de fluide.

3. Buse d'injecteur selon la revendication 1 ou 2, dans laquelle :
le premier groupe d'orifices (1121-1125) comprend des premier à cinquième orifices,
les premier et deuxième orifices, les deuxième et troisième orifices, les troisième et quatrième orifices, et les quatrième et cinquième orifices sont espacés angulairement l'un de l'autre par environ 45°, et
le premier orifice et le cinquième orifice sont espacés angulairement l'un de l'autre par environ 180°.

4. Buse d'injecteur selon la revendication 1, 2 ou 3, dans laquelle :
le second groupe d'orifices (1126-1130) comprend des premier à cinquième orifices,
les premier et deuxième orifices, les deuxième et troisième orifices, les troisième et quatrième orifices, et les quatrième et cinquième orifices sont espacés angulairement l'un de l'autre par environ 45°, et
le premier orifice et le cinquième orifice sont espacés angulairement l'un de l'autre par environ 180°.

5. Buse d'injecteur selon la revendication 1 ou 2, dans laquelle:
le premier groupe d'orifices (1121-1125) comprend des premier à cinquième orifices,
les premier et deuxième orifices, les deuxième et troisième orifices, les troisième et quatrième orifices, et les quatrième et cinquième orifices sont espacés angulairement l'un de l'autre par environ 36°,
le premier orifice et le cinquième orifice sont espacés angulairement l'un de l'autre par environ 216°,
le guide d'écoulement de fluide comprend en outre un premier passage de fluide central qui passe à travers l'axe central du premier cercle imaginaire (1111), et le premier passage de fluide central présente un premier orifice central sur la surface extérieure du guide d'écoulement de fluide, et
un prolongement imaginaire du premier passage de fluide central converge avec les prolongements imaginaires du premier groupe de passages de fluide au niveau de l'au moins un premier point focal (1113), de telle sorte que le jet de flux qui passe à travers le premier passage de fluide central entre en collision avec les jets de flux qui passent à travers le premier groupe des passages de fluides pour former le premier panache de pulvérisation.

6. Buse d'injecteur selon la revendication 1, 2 ou 3, dans laquelle :
le second groupe d'orifices (1126-1130) comprend des premier à cinquième orifices,
les premier et deuxième orifices, les deuxième et troisième orifices, les troisième et quatrième orifices, et les quatrième et cinquième orifices sont espacés angulairement l'un de l'autre par environ 36°,
le premier orifice et le cinquième orifice sont espacés angulairement l'un de l'autre par environ 216°,
le guide d'écoulement de fluide comprend en outre un second passage de fluide central qui passe à travers l'axe central du deuxième cercle imaginaire (1112), et le second passage de fluide central présente un second orifice central sur la surface extérieure du guide d'écoulement de fluide, et
un prolongement imaginaire du second passage de fluide central converge avec les prolongements imaginaires du second groupe de passages de fluide au niveau de l'au moins un deuxième point focal (1114), de telle sorte que le jet de flux qui passe à travers le second passage de fluide central entre en collision avec les jets de flux qui passent à travers le second groupe des passages de fluide pour former le second panache de pulvérisation.

7. Buse d'injecteur selon la revendication 1 ou 2,
dans laquelle le premier groupe de passages de fluide comprend :
un premier sous-groupe de passages et un premier sous-groupe d'orifices correspondant respectivement au premier sous-groupe de passages de fluide, le premier sous-groupe d'orifices étant disposé sur un premier cercle imaginaire sur une surface extérieure du guide d'écoulement de fluide, le premier sous-groupe d'orifices étant réparti radialement de manière asymétrique sur le premier cercle imaginaire par rapport à l'axe central du premier cercle imaginaire ;
un deuxième sous-groupe de passages et un deuxième sous-groupe d'orifices correspondant respectivement au deuxième sous-groupe de passages de fluide, le deuxième sous-groupe d'orifices étant disposé sur un deuxième cercle imaginaire sur une surface extérieure du guide d'écoulement de fluide, le deuxième sous-groupe d'orifices étant réparti radialement de manière asymétrique sur le deuxième cercle imaginaire par rapport à l'axe central du deuxième cercle imaginaire ;
un troisième sous-groupe d'au moins un passage et un troisième sous-groupe d'au moins un orifice correspondant respectivement au troisième sous-groupe d'au moins un passage, le troisième sous-groupe d'au moins un orifice étant disposé sur un troisième cercle imaginaire sur la surface extérieure du guide d'écoulement de fluide, le troisième sous-groupe d'au moins un orifice étant réparti radialement de manière asymétrique sur le troisième cercle imaginaire par rapport à l'axe central du troisième cercle imaginaire ;
dans laquelle le premier cercle imaginaire, le deuxième cercle imaginaire et le troisième cercle imaginaire sont concentriques ; et
un premier passage central qui passe à travers l'axe central des premier au troisième cercles imaginaires et un premier orifice central correspondant au premier passage central,
dans laquelle des prolongements imaginaires du premier sous-groupe de passages, des prolongements imaginaires du deuxième sous-groupe de passages, des prolongements imaginaires du troisième sous-groupe d'au moins un passage et un prolongement imaginaire du premier passage central convergent pour créer au moins un premier point focal, de telle sorte que les jets de la pluralité de jets de flux qui passe à travers le premier groupe de passages entrent en collision les uns avec les autres pour former un premier panache de pulvérisation.

8. Buse d'injecteur selon la revendication 7,
dans laquelle le second groupe de passages de fluide comprend:
un quatrième sous-groupe de passages et un quatrième sous-groupe d'orifices correspondant au quatrième sous-groupe de passages de fluide, respectivement, le quatrième sous-groupe d'orifices étant disposé sur un quatrième cercle imaginaire sur une surface extérieure du guide d'écoulement de fluide, le quatrième sous-groupe d'orifices étant réparti radialement de manière asymétrique sur le quatrième cercle imaginaire par rapport à l'axe central du quatrième cercle imaginaire ;
un cinquième sous-groupe de passages et un cinquième sous-groupe d'orifices correspondant respectivement au cinquième sous-groupe de passages de fluide, le cinquième sous-groupe d'orifices étant disposé sur un cinquième cercle imaginaire sur la surface extérieure du guide d'écoulement de fluide, le cinquième sous-groupe d'orifices étant réparti radialement de manière asymétrique sur le cinquième cercle imaginaire par rapport à l'axe central du cinquième cercle imaginaire ;
un sixième sous-groupe d'au moins un passage et un sixième sous-groupe d'au moins un orifice correspondant respectivement au sixième sous-groupe d'au moins un passage, dans laquelle le sixième sous-groupe d'au moins un orifice est disposé sur un sixième cercle imaginaire sur la surface extérieure du guide d'écoulement de fluide, le sixième sous-groupe d'au moins un orifice étant réparti radialement de manière asymétrique sur le troisième cercle imaginaire par rapport à l'axe central du troisième cercle imaginaire ;
dans laquelle le quatrième cercle imaginaire, le cinquième cercle imaginaire et le sixième cercle imaginaire sont concentriques ; et
un second passage central qui passe à travers l'axe central des quatrième à sixième cercles imaginaires et un second orifice central correspondant au second passage central,
dans laquelle des prolongements imaginaires du quatrième sous-groupe de passages, les prolongements imaginaires du cinquième sous-groupe de passages, les prolongements imaginaires du sixième sous-groupe d'au moins un passage et le prolongement imaginaire du second passage central convergent pour créer au moins un deuxième point focal, de telle sorte que les jets de la pluralité de jets de flux qui passe à travers le second groupe de passages entrent en collision les uns avec les autres pour former un second panache de pulvérisation.

9. Buse d'injecteur selon la revendication 8,
dans laquelle le quatrième sous-groupe d'orifices comprend un sixième orifice, un septième orifice et un huitième orifice, les sixième et septième orifices sont espacés angulairement l'un de l'autre par environ 30°, les septième et huitième orifices sont espacés angulairement l'un de l'autre par environ 30°, et les sixième et huitième orifices sont espacés angulairement l'un de l'autre par environ 300° ; et
dans laquelle le cinquième sous-groupe d'orifices comprend un neuvième orifice et un dixième orifice espacés angulairement l'un de l'autre part environ 40°.

10. Buse d'injecteur selon la revendication 7,
dans laquelle le premier sous-groupe d'orifices comprend un premier orifice, un deuxième orifice et un troisième orifice, les premier et deuxième orifices sont espacés angulairement l'un de l'autre par environ 30°, les deuxième et troisième orifices sont espacés angulairement l'un de l'autre par environ 30°, et les premier et troisième orifices sont espacés angulairement l'un de l'autre par environ 300° ; et
dans laquelle le deuxième sous-groupe d'orifices comprend un quatrième orifice et un cinquième orifice espacés angulairement l'un de l'autre par environ 40°.

11. Buse d'injecteur selon la revendication 7,
dans laquelle l'au moins un premier point focal comprend un premier groupe de trois points focaux ;
dans laquelle le premier point du premier groupe de trois points focaux est formé par la convergence des prolongements imaginaires du premier sous-groupe de passages et du prolongement imaginaire du premier passage central ;
dans laquelle le deuxième point du premier groupe de trois points focaux est formé par la convergence des prolongements imaginaires du deuxième sous-groupe de passages et du prolongement imaginaire du premier passage central ; et
dans laquelle le troisième point du premier groupe de trois points focaux est formé par la convergence des prolongements imaginaires du troisième sous-groupe de passages et du prolongement imaginaire du premier passage central.

12. Buse d'injecteur selon la revendication 8,
dans laquelle l'au moins un deuxième point focal comprend un second groupe de trois points focaux ;
dans laquelle le premier point du second groupe de trois points focaux est formé par la convergence des prolongements imaginaires du quatrième sous-groupe de passages et du prolongement imaginaire du second passage central ;
dans laquelle le deuxième point du second groupe de trois points focaux est formé par la convergence des prolongements imaginaires du cinquième sous-groupe de passages et du prolongement imaginaire du deuxième passage central ; et
dans laquelle le troisième point du second groupe de trois points focaux est formé par la convergence des prolongements imaginaires du sixième sous-groupe de passage et du prolongement imaginaire du second passage central.
